# EUROPÄISCHE PATENTANMELDUNG

(11) **EP 4 572 103 A1**
(43) Veröffentlichungstag der Anmeldung: **18.06.2025**
(21) Anmeldenummer: 23216647.0
(22) Anmeldetag: 14.12.2023
(51) Int. Cl.: H02K 5/15, H02K 1/18, H02K 5/20, H02K 7/08, H02K 7/14, H02K 9/06, H02K 21/16, A47J 43/08

(54) **ELEKTROMOTOR UND KÜCHENMASCHINE**

(71) Anmelder: Vorwerk & Co. Interholding GmbH, 42275 Wuppertal (DE)
(72) Erfinder: HUSCHYAR, Mohammed, 40225 Düsseldorf (DE); KRAUS, Roland, 40822 Mettmann (DE); INGENLATH, Philipp, 58332 Schwelm (DE); SCHMIDT, Dirk, 51688 Wipperfürth (DE); SEIBT, Patrick, 40789 Monheim am Rhein (DE); SCHÖNHOFF, Helmut, 42898 Remscheid (DE); HEYNEN, Andreas, 42477 Radevormwald (DE); KULKARNI, Kshiteesh, 42103 Wuppertal (DE); GÜNZEL, Klaus Peter Björn, 04105 Leipzig (DE)
(74) Vertreter: Von Rohr Patentanwälte Partnerschaft mbB

(57) **Zusammenfassung**

Es wird ein Elektromotor, insbesondere für eine Küchenmaschine, vorgeschlagen, wobei der Elektromotor eine Lagerbrücke für ein Lager zur drehbaren Lagerung eines Rotors des Elektromotors aufweist. Die Lagerbrücke hat einen Lagersitz, der durch eine sich in axialer, einem Innenraum des Elektromotors abgewandter Richtung erstreckenden Wandung gebildet ist, wobei die Lagerbrücke eine sich um den Lagersitz herum erstreckende Vertiefung aufweist. Ferner wird eine Küchenmaschine mit einem entsprechenden Elektromotor vorgeschlagen.

## Beschreibung

Die vorliegende Erfindung betrifft einen Elektromotor, insbesondere für eine Küchenmaschine, sowie eine Küchenmaschine mit einem Elektromotor.

Elektromotoren, beispielsweise in Form von bürstenlosen Gleichstrommotoren (BLDC-Motoren) oder geschalteten Reluktanzmotoren (SR-Motoren), sind aus dem Stand der Technik bekannt und weisen einen Ständer/Stator und einen relativ zum Stator rotierenden Läufer/Rotor auf.

Bei bürstenlosen Gleichstrommotoren ist der Stator mit Statorspulen und der Rotor mit Permanentmagneten bestückt. Die Permanentmagneten können hierbei außen am Rotorkern (SPM - Surface Permanent Magnet) oder im Rotorkern vorgesehen bzw. eingebettet sein (IPM - Interior Permanent Magnet).

Bei geschalteten Reluktanzmotoren ist der Stator ebenfalls mit Statorspulen bestückt, der Rotor weist jedoch keine Permanentmagneten oder Spulen auf, sondern besteht ausschließlich aus Elektroblech oder dergleichen. Das Drehmoment im Rotor wird hierbei ausschließlich durch die Reluktanzkraft erzeugt.

Besondere Herausforderungen ergeben sich bei Elektromotoren, die über großen Drehzahl- und Drehmomentbandbreiten arbeiten, beispielsweise beim Einsatz in einer Küchenmaschine. Hierbei kommt es zu unterschiedlichen mechanischen Belastungen des Motors und der Küchenmaschine als Ganzes. Außerdem hat das große Drehzahlspektrum Auswirkungen auf das akustische wie auch mechanische Schwingungsverhalten des Motors. Hier ist es wünschenswert, die auftretenden Schwingungen über einen möglichst großen Drehzahlbereich klein zu halten, um eine effiziente Laufweise und geringe Geräuschemission zu ermöglichen.

Zudem sollte der Motor beim Einsatz in einer Küchenmaschine klein und kompakt sein, da diese sonst zu groß für den Küchenbereich wird.

Die DE 10 2009 024 991 A1 zeigt einen Elektromotor, insbesondere einen Reluktanzmotor, mit einem Rotor und einem Stator, wobei der Stator in einem aus zwei Teilen bestehenden Motorgehäuse aufgenommen ist, welche Gehäuseteile zugleich jeweils eine Lagerbrücke ausbilden, in denen jeweils Lager für eine Rotorwelle aufgenommen sind. Die beiden Lagerbrücken sind hierbei identisch ausgebildet und bilden jeweils einen Lagertopf, der axial nach innen in Richtung auf den Stator gerichtet ist. Aufgrund der notwendigen Tiefe des Lagertopfs zur Aufnahme des Lagers baut die Lagerbrücke relativ hoch. Ferner ist das Lager von der Haupterstreckungsebene der Lagerbrücke entfernt angeordnet, was unerwünschte Schwingungen begünstigen kann.

Der vorliegenden Erfindung liegt die Aufgabe zugrunde, einen verbesserten Elektromotor und eine Küchenmaschine mit einem verbesserten Elektromotor anzugeben, wobei der Elektromotor eine einfache, kompakte, stabile und/oder kostengünstige Konstruktion aufweist bzw. eine einfache, schnelle, kompakte, stabile und/oder kostengünstige Montage/Herstellung ermöglicht, und/oder wobei der Elektromotor eine besonders effiziente Laufweise, geringe Geräuschemission, gute Wärmeabfuhr/Luftführung und/oder hohe Leistungsdichte, insbesondere über einen großen Drehzahlbereich, aufweist.

Die der Erfindung zugrundeliegende Aufgabe wird durch einen Elektromotor gemäß Anspruch 1 oder eine Küchenmaschine gemäß Anspruch 15 gelöst. Vorteilhafte Weiterbildungen sind Gegenstand der Unteransprüche.

Der vorschlagsgemäße Elektromotor weist einen (feststehenden) Stator und einen relativ zum Stator um eine Rotationsachse drehbaren Rotor auf.

Die räumlichen Zuordnungen, Anordnungen und/oder Ausrichtungen, insbesondere die im Rahmen der vorliegenden Erfindung verwendeten Begriffe "radial", "axial" und/oder "in Umfangsrichtung", beziehen sich - sofern nicht anders angegeben - insbesondere auf die Rotationsachse des Rotors bzw. eine Rotorwelle des Rotors.

Wird nur ein Bauteil des Motors, beispielsweise eine Lagerbrücke, beschrieben, beziehen sich die entsprechenden Begrifflichkeiten vorzugsweise auf die (gedachte) Rotationsachse bei eingesetztem Rotor. Die Begrifflichkeiten können aber auch auf eine Symmetrieachse oder Zentralachse des Bauteils bezogen werden, die bevorzugt mit der Rotationsachse zusammenfällt.

Begriffe wie "oben", "unten" und dergleichen beziehen sich vorzugsweise auf die Erstreckung der Rotationsachse des Rotors bzw. Zentral-/Symmetrieachse des Bauteils.

Die Begriffe werden hierbei gemäß der bevorzugten Ausrichtung des Elektromotors im eingebauten Zustand verwendet. Hierbei ist jedoch zu berücksichtigen, dass der Einbau des Elektromotors in eine Küchenmaschine oder eine andere Vorrichtung auch in einer anderen Ausrichtung erfolgen kann.

Der Rotor weist vorzugsweise eine Welle und/oder einen Lüfter, insbesondere ein Lüfterrad, auf. Als Teil des Rotors rotiert der Lüfter bei Betrieb des Elektromotors um die Rotationsachse und kann so entsprechend Luft fördern, um den Elektromotor zu kühlen.

Der Elektromotor weist mindestens ein Lager, vorzugsweise zwei Lager, auf, um den Rotor, insbesondere die Welle, drehbar zu lagern. Insbesondere ist der Rotor zumindest einseitig, vorzugsweise zweiseitig, gelagert.

Für das/die Lager weist der Elektromotor (jeweils) eine, vorzugsweise einstückige, Lagerbrücke auf, die einen Lagersitz, in dem das Lager angeordnet bzw. anordenbar ist, und einen Deckabschnitt bildet.

Besonders bevorzugt weist der Elektromotor zwei Lagerbrücken auf, im Folgenden als obere Lagerbrücke und untere Lagerbrücke bezeichnet. Die im Folgenden für eine Lagerbrücke beschriebenen Merkmale und Vorteile gelten vorzugsweise auch für die andere Lagerbrücke, sofern nicht anders erläutert.

Vorzugsweise können auf das Lager wirkende Kräfte über die Lagerbrücke abgeleitet werden, beispielsweise in eine Halterung für den Elektromotor.

Der Deckabschnitt erstreckt sich vorzugsweise zumindest im Wesentlichen orthogonal zur Rotationsachse bzw. Welle und/oder deckt den Rotor vorzugweise zumindest teilweise ab. Insbesondere deckt der Deckabschnitt den Lüfter vollständig ab.

Vorzugsweise begrenzt die Lagerbrücke bzw. der Deckabschnitt einen Innenraum des Elektromotors axial nach außen, wobei in dem Innenraum - zumindest teilweise - der Rotor und der Stator aufgenommen bzw. angeordnet sind. Insbesondere ist der Lüfter, vorzugsweise vollständig, im Innenraum angeordnet.

Die Begriffe "außen" und "innen" beziehen sich vorzugsweise auf die jeweiligen Seiten der Lagerbrücke. Vorzugsweise meint also "außen" vom Innenraum abgewandt und "innen" dem Innenraum zugewandt.

Bei zwei Lagerbrücken ist vorzugsweise zwischen diesen, insbesondere zwischen deren Deckabschnitten, der Innenraum gebildet.

Gemäß einem Aspekt der vorliegenden Erfindung weist der Deckabschnitt eine (ringförmige) Vertiefung zum Innenraum auf, die um den Lagersitz herum angeordnet ist und den Deckabschnitt mit dem Lagersitz verbindet, wobei der Lagersitz durch eine Wandung gebildet ist, die sich von der Vertiefung axial nach außen bzw. in axialer, dem Innenraum abgewandter Richtung erstreckt.

Durch diese Ausgestaltung der Lagerbrücke ist der Lagersitz bzw. das Lager axial außen an der Lagerbrücke angeordnet bzw. auf der dem Innenraum abgewandten, axialen Seite der Lagerbrücke bzw. des Deckabschnitts.

Durch die außenseitige Anordnung des Lagers bzw. des Lagersitzes bzw. die Erstreckung der den Lagersitz bildenden Wandung in eine dem Innenraum abgewandte Richtung kann die Lagerbrücke, insbesondere der Deckabschnitt, einen geringen (axialen) Abstand von den im Innenraum angeordneten Teilen des Rotors und/oder Stators aufweisen und/oder möglichst flach ausgebildet sein/werden. Insbesondere wird vermieden, dass im Innenraum des Elektromotors (zusätzlicher) Platz für das/die Lager benötigt wird. Dies ist einer besonders kompakten und materialsparenden Bauweise zuträglich. Zudem wird auch die Steifigkeit des Elektromotors erhöht, insbesondere da die eng anliegende Lagerbrücke einen direkteren Kraftfluss ermöglicht. Dies sorgt letztendlich auch für weniger Schwingungen und somit eine geringere Geräuschemission und effizientere Laufweise. Zudem wird der Freiraum im Innenraum bzw. der Freiraum zwischen Lagerbrücke und im Innenraum angeordneten Teilen minimiert, was für weniger Luftstauung und eine bessere Luftführung sorgt.

Je größer allerdings der axiale Abstand zwischen Lager bzw. Lagersitz und Deckabschnitt ist, desto größer ist ein hieraus resultierender Hebelarm. Das Lager nimmt die durch Drehung des Rotors entstehenden Kräfte auf, die über die Lagerbrücke abgeleitet werden. Der Hebelarm führt dazu, dass es zu einem oszillierenden, reversiblen Biegen und Knicken in der Oberfläche der Lagerbrücke, insbesondere des Deckabschnitts, kommt. In den Bereichen mit großer Oberfläche und mit hoher Oberflächengeschwindigkeit wird eine hohe Schallleistung abgestrahlt.

Unter dem axialen Abstand ist hierbei insbesondere der Abstand zwischen einer Lagerebene, die orthogonal zur Rotationsachse und mittig durch das Lager verläuft, und einer Deckebene, die orthogonal zur Rotationsachse und entlang (der Haupterstreckung) des Deckabschnitts verläuft, zu verstehen.

Die ringförmige Vertiefung sorgt dafür, dass der axiale Abstand zwischen Lager bzw. Lagersitz und Deckabschnitt verkleinert wird. Insbesondere kann das Lager bzw. der Lagersitz innerhalb der Deckebene angeordnet sein bzw. so, dass die Deckebene das Lager bzw. den Lagersitz schneidet. Dies führt zu einem geringen Hebelarm und folglich zu weniger Schwingungen und damit zu einer geringeren Geräuschemission und effizienteren Laufweise.

Die ringförmige Vertiefung einerseits und die sich axial nach außen erstreckende Wandung andererseits wirken folglich in einer synergistischen Weise zusammen. Einerseits wird das Lager außenseitig angeordnet, was die oben beschriebenen Vorteile mit sich bringt. Andererseits wird vermieden, dass diese außenseitige Anordnung einen zu großen Hebelarm erzeugt. Die Kombination aus ringförmiger Vertiefung und sich axial nach außen erstreckender Wandung ist daher besonders vorteilhaft.

Die Vertiefung ist vorzugsweise konisch ausgebildet. Diese Form ist besonders vorteilhaft, um die Kräfte des Lagers über den Deckabschnitt abzuleiten und/oder Schwingungen zu minimieren. Insbesondere wird verhindert, dass sich der Elektromotor beim Betrieb zu stark oval verformt. Ferner wird weniger Material als bei einer zylindrischen Ausbildung benötigt.

Die Lagerbrücke ist vorzugsweise (direkt) am Stator, insbesondere einem Statorkern des Stators, befestigt, insbesondere festgeschraubt. Hierdurch wird eine besonders stabile Befestigung der Lagerbrücke erzielt, was einem guten Ableiten von Kräften, einer Reduzierung von Schwingungen und einer kompakten Bauweise zuträglich ist.

Die Lagerbrücke weist vorzugsweise einen umlaufenden bzw. sich in Umfangsrichtung erstreckenden Randabschnitt auf.

Vorzugsweise erstreckt sich der Randabschnitt schräg zum Deckabschnitt und/oder zur Rotationsachse und/oder schließt mit dem Deckabschnitt einen stumpfen Winkel ein. Besonders bevorzugt beträgt der (Innen-)Winkel zwischen Deckabschnitt und Randabschnitt mehr als 100°, insbesondere mehr als 130°.

Durch den schräg bzw. in einem stumpfen Winkel zum Deckabschnitt angeordneten Randabschnitt wird der Kraftfluss verbessert, insbesondere ein optimaler Kraftfluss vom Lager zum Stator ermöglicht. Insbesondere werden die Kräfte, die vom Lager stammen, umgelenkt, vorzugsweise bei verminderter Biegung der Lagerbrücke.

Alternativ oder zusätzlich weist der Randabschnitt vorzugweise eine oder mehrere Lüftungsöffnungen auf. Besonders bevorzugt weist die Lagerbrücke ausschließlich Lüftungsöffnungen im Randabschnitt auf. Hierdurch wird die Luftführung zur Kühlung des Motors verbessert und eine gute Wärmeabfuhr erzielt.

Alternativ oder zusätzlich kann die Lagerbrücke Lüftungsöffnungen im Deckabschnitt aufweisen.

Bevorzugt weist die Lagerbrücke vorzugsweise mehrere sich in radialer Richtung erstreckende Sicken auf. Durch die Sicken wird die Lagerbrücke versteift, was einem stabileren und/oder kompakteren Elektromotor zuträglich ist. Durch die Versteifung können Schwingungen und somit die Geräuschemission verringert werden.

Vorzugsweise sind die Sicken, zumindest bei der oberen Lagerbrücke, nach innen geformt. Hierunter ist vorzugsweise zu verstehen, dass die Sicken auf der Außenseite der Lagerbrücke vertieft sind und auf der Innenseite erhöht.

Durch die nach innen geformten Sicken wird vorzugweise die Luftführung verbessert. Insbesondere kann die Luft im Innenraum des Elektromotors besser von innen nach außen abgeführt werden, was insbesondere dann vorteilhaft ist, wenn die Lüftungsöffnungen im Randabschnitt ausgebildet sind. Insbesondere kommt es durch die sternförmige bzw. strahlenförmige Anordnung der Sicken zu einer gleichmäßigen Luftführung von innen nach außen. Da die Luft somit vorzugweise im Wesentlichen radial abgeführt wird, wird zudem vermieden oder verringert, dass die Lagerbrücke, insbesondere deren Deckabschnitt, durch die Luftströmung zum Schwingen angeregt wird, was wiederum einer geringeren Geräuschemission zuträglich ist.

Die nach innen geformten Sicken können den zuvor beschriebenen Hebelarm vergrößern, insbesondere da Material des Deckabschnitts in Richtung des Innenraums bzw. vom Lager weg verschoben wird. Der vergrößerte Hebelarm wird jedoch vorzugsweise durch die Aussteifung und verbesserte Luftführung überkompensiert, so dass die nach innen geformten Sicken insgesamt vorteilhaft sind. Insbesondere kommt es bei der Lagerbrücke mit nach innen geformten Sicken zu einem besseren Kraftfluss und/oder weniger Schwingungen als bei einer identischen Lagerbrücke ohne Sicken.

Alternativ können die Sicken auch nach außen geformt sein, was insbesondere den Hebelarm verringert. Die Ausführung mit nach innen geformten Sicken ist jedoch bevorzugt und aufgrund der verbesserten (radialen) Luftführung vorteilhafter.

Besonders bevorzugt nimmt die Tiefe der Sicken in radialer Richtung zur Rotationsachse bzw. zur Vertiefung bzw. zum Lager/Lagersitz hin zu. Hierdurch wird der durch die Sicken entstehende Hebelarm reduziert, was den Kraftfluss verbessert und Schwingungen reduziert. Zudem wird hierdurch auch die Luftführung weiter optimiert.

Im Querschnitt weist die Lagerbrücke beim Übergang von einer Sicke zur um den Lagersitz angeordneten Vertiefung vorzugsweise zumindest im Wesentlichen eine S-Form oder Wellenform auf. Hierdurch entsteht vorzugsweise auf der Innenseite bzw. der dem Lüfter zugewandten Seite ein Verwirbelungsabschnitt, der die Luftströmungsführung verbessert und/oder zur Reduzierung von Schwingungsanregungen bzw. einer geringeren Geräuschemission führt.

Die Ausgestaltung der Sicken kann auch einen unabhängigen Aspekt der Erfindung darstellen.

Die Lagerbrücke hat vorzugsweise eine Wanddicke von weniger als 2,5 mm, insbesondere von weniger als 2 mm. Insbesondere ist die Lagerbrücke aufgrund der bevorzugten (geometrischen) Ausgestaltung bereits bei derartigen Wanddicken stabil genug, um den Kraftfluss entsprechend ableiten zu können und um Schwingungen zu reduzieren, was sonst nur mit größeren Wanddicken erzielt werden könnte. Somit wird eine kompakte und kostengünstige Bauweise ermöglicht.

Die obere und untere Lagerbrücke sind vorzugsweise unterschiedlich ausgebildet. Durch die unterschiedliche Ausbildung kann jede Lagerbrücke vorzugsweise bezüglich Kraftfluss, Luftführung, Schwingungsminimierung etc. individuell angepasst bzw. optimiert werden, insbesondere da unterschiedliche Anforderungen an die Lagerbrücken gestellt sein können.

Vorzugsweise ist die obere Lagerbrücke die dem Lüfter zugewandte bzw. zum Lüfter benachbarte Lagerbrücke und/oder die untere Lagerbrücke die vom Lüfter abgewandte bzw. weiter beabstandete Lagerbrücke. Insbesondere ist, bezogen auf den Luftstrom im Betrieb, die untere Lagerbrücke stromaufwärts und die obere Lagerbrücke stromabwärts des Lüfters angeordnet.

Der Deckabschnitt der oberen Lagerbrücke weist vorzugsweise einen größeren (axialen) Abstand vom Stator auf als der Deckabschnitt der unteren Lagerbrücke. Hierdurch kann an der oberen Lagerbrücke mehr Platz im Innenraum geschaffen werden, beispielsweise für den Lüfter. Gleichzeitig kann die untere Lagerbrücke, wo weniger Platz erforderlich ist, enger anliegend ausgebildet werden, was die bereits oben beschriebenen Vorteile erzielt. Vorzugsweise ist jedoch auch bei der oberen Lagerbrücke der Abstand so gering wie möglich, insbesondere mit möglichst geringem Abstand zum Lüfter.

Besonders bevorzugt weist eine der Lagerbrücken, insbesondere die obere Lagerbrücke, ausschließlich Lüftungsöffnungen in ihrem Randabschnitt auf, während die andere Lagerbrücke, insbesondere die untere Lagerbrücke, ausschließlich Lüftungsöffnungen in ihrem Deckabschnitt aufweist.

Hierdurch wird vorzugsweise die Luftführung durch den Elektromotor verbessert bzw. optimiert. Insbesondere kann Luft durch die Lüftungsöffnungen im Deckabschnitt der unteren Lagerbrücke eingesogen und durch die Lüftungsöffnungen im Randabschnitt der oberen Lagerbrücke ausgestoßen werden. Dies ermöglicht eine gute Wärmeabfuhr bzw. Kühlung des Elektromotors. Zudem kann der Elektromotor besonders kompakt in beispielsweise eine Küchenmaschine eingebaut werden, da die Luft seitlich ausgestoßen wird.

Vorzugsweise sind die Sicken der oberen und der unteren Lagerbrücke unterschiedlich ausgebildet. Insbesondere sind die Sicken der oberen Lagerbrücke nach innen geformt, während die Sicken der unteren Lagerbrücke nach außen geformt sind.

Durch die nach innen geformten Sicken kann die Luftführung, insbesondere in radialer Richtung, verbessert werden, wie bereits oben beschrieben. Dies ist insbesondere bei der oberen Lagerbrücke bzw. seitlichem Abführen der Luft vorteilhaft. Hingegen haben bei axial einströmender Luft die Sicken vorzugsweise nur einen geringen Einfluss auf die Luftführung. Die untere Lagerbrücke kann daher vorzugsweise mit nach außen geformten Sicken ausgebildet werden, wodurch die Lagerbrücke enger anliegen kann und/oder der resultierende Hebelarm reduziert wird, was wiederum wie oben beschrieben für einen verbesserten Kraftfluss und geringere Geräuschemission vorteilhaft ist.

Generell ist/sind die vorschlagsgemäße(n) Lagerbrücke(n) vorzugsweise derart ausgestaltet, dass eine optimierte Luftführung durch den Elektromotor und somit gute Wärmeabfuhr, eine einfache, kompakte, stabile und/oder kostengünstige Bauweise und/oder eine Minimierung von auftretenden Schwingungen, insbesondere über einen großen Drehzahlbereich, ermöglicht wird. Hierdurch kann eine geringe Geräuschemission, effiziente Laufweise und/oder hohe Leistungsdichte erzielt werden.

Vorzugsweise hat der vorschlagsgemäße Elektromotor eine große Drehzahlspreizung. Hierunter ist zu verstehen, dass der Elektromotor über einen großen Drehzahlbereich betrieben werden kann, insbesondere sowohl bei niedrigen als auch bei hohen Drehzahlen. Besonders bevorzugt sind Drehzahlen von 10 U/min bis 10.000 U/min, ganz besonders bevorzugt von 1 U/min bis 12.000 U/min oder bis 15.000 U/min, mit dem vorschlagsgemäßen Elektromotor realisierbar.

Vorzugsweise weist der Elektromotor über den gesamten realisierbaren Drehzahlbereich eine geringe Geräuschemission, effiziente Laufweise und/oder hohe Leistungsdichte auf, insbesondere aufgrund der Ausgestaltung der Lagerbrücke(n).

Besonders bevorzugt ist der Elektromotor, insbesondere die Lagerbrücke(n), so ausgestaltet bzw. dimensioniert, dass die Schallabstrahlung bzw. die Schallleistung bzw. der akustische Wirkungsgrad minimiert ist, insbesondere in den Bereichen mit gro-ßen Flächen, vorzugsweise über den gesamten realisierbaren Drehzahlbereich. Insbesondere werden Resonanzfrequenzen bzw. Eigenfrequenzen vermieden.

Ein weiterer, auch unabhängig realisierbarer Aspekt der vorliegenden Erfindung betrifft eine Küchenmaschine mit einem vorschlagsgemäßen Elektromotor.

Die vorschlagsgemäße Küchenmaschine wird von dem Elektromotor angetrieben, insbesondere zum Zerkleinern und/oder Rühren bzw. Mischen von Lebensmitteln. Besonders bevorzugt weist die Küchenmaschine einen Rührer, eine Schneide o. dgl. auf, der/die von dem Elektromotor in Rotation versetzt werden kann.

Durch die Verwendung des vorschlagsgemäßen Elektromotors in einer Küchenmaschine können entsprechende Vorteile erzielt werden. Insbesondere ist die geringe Geräuschemission und/oder effiziente Laufweise vorteilhaft.

Zudem ist der große Drehzahlbereich, in dem der Elektromotor arbeiten kann, besonders vorteilhaft bei der Verwendung in einer Küchenmaschine. Je nach eingestellter Drehzahl des Elektromotors kann sowohl ein Rühren von Speisen als auch ein Zerkleinern von Speisen erzielt werden. Der vorschlagsgemäße Elektromotor erlaubt hierbei vorzugsweise auch ein langsames Rühren, was eine größere Rezeptvielfalt erlaubt. Zudem wird vorzugsweise auch ein definiertes Zerkleinern von Zutaten ermöglicht, was einer besseren Zubereitung und/oder besseren Optik der Speisen zuträglich ist.

Ferner kann der vorschlagsgemäße Elektromotor aufgrund seiner kompakten, flachen bzw. einfachen Bauweise besonders platzsparend in der Küchenmaschine angeordnet werden.

Grundsätzlich kann der Elektromotor jedoch auch in anderen Vorrichtungen verwendet werden, beispielsweise einem Staubsauger oder Saugroboter.

Die vorgenannten Aspekte und Merkmale sowie die sich aus den Ansprüchen und der nachfolgenden Beschreibung ergebenden Aspekte und Merkmale der vorliegenden Erfindung können grundsätzlich unabhängig voneinander, aber auch in beliebiger Kombination realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung bevorzugter Ausführungsformen anhand der Figuren. Es zeigen in schematischer, nicht maßstabsgetreuer Darstellung:
- Fig. 1: eine perspektivische Ansicht eines vorschlagsgemäßen Elektromotors;
- Fig. 2: eine Explosionsdarstellung des Elektromotors gemäß Fig. 1;
- Fig. 3: einen Schnitt des Elektromotors gemäß Fig. 1;
- Fig. 4: eine perspektivische Ansicht der oberen Lagerbrücke des Elektromotors von außen;
- Fig. 5: eine perspektivische Ansicht der oberen Lagerbrücke des Elektromotors von innen;
- Fig. 6: einen Schnitt der oberen Lagerbrücke im Bereich von zwei gegenüberliegenden Sicken;
- Fig. 7: einen Schnitt der oberen Lagerbrücke außerhalb der Sicken;
- Fig. 8: eine perspektivische Ansicht der unteren Lagerbrücke des Elektromotors von außen;
- Fig. 9: eine perspektivische Ansicht der unteren Lagerbrücke des Elektromotors von innen;
- Fig. 10: einen Schnitt der unteren Lagerbrücke im Bereich von zwei gegenüberliegenden Sicken;
- Fig. 11: einen Schnitt der unteren Lagerbrücke außerhalb der Sicken; und
- Fig. 12: eine Seitenansicht einer vorschlagsgemäßen Küchenmaschine.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden, auch wenn von einer Wiederholung abgesehen wird.

Zur besseren Übersichtlichkeit sind bei gleichen Bauteilen und Komponenten innerhalb einer Figur nicht alle Bauteile/Komponenten mit einem Bezugszeichen versehen.

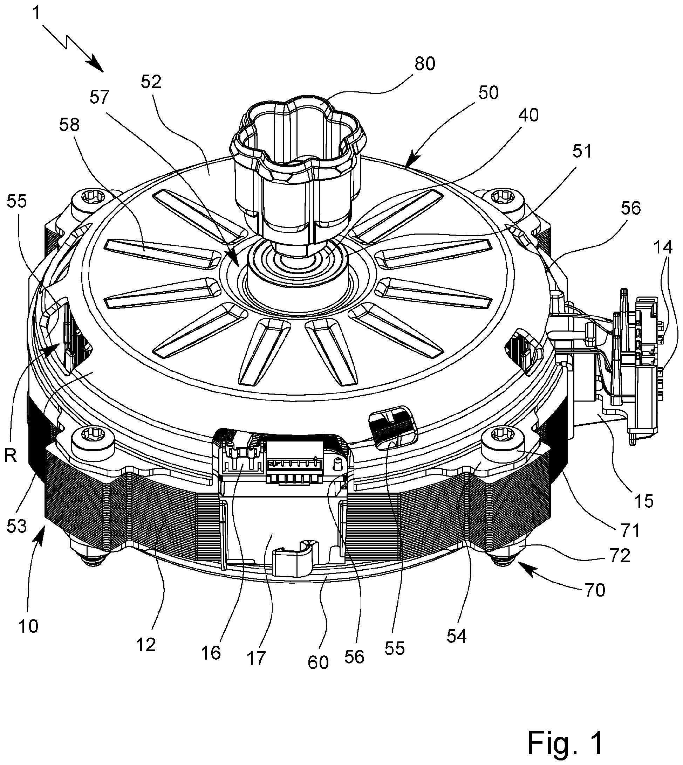

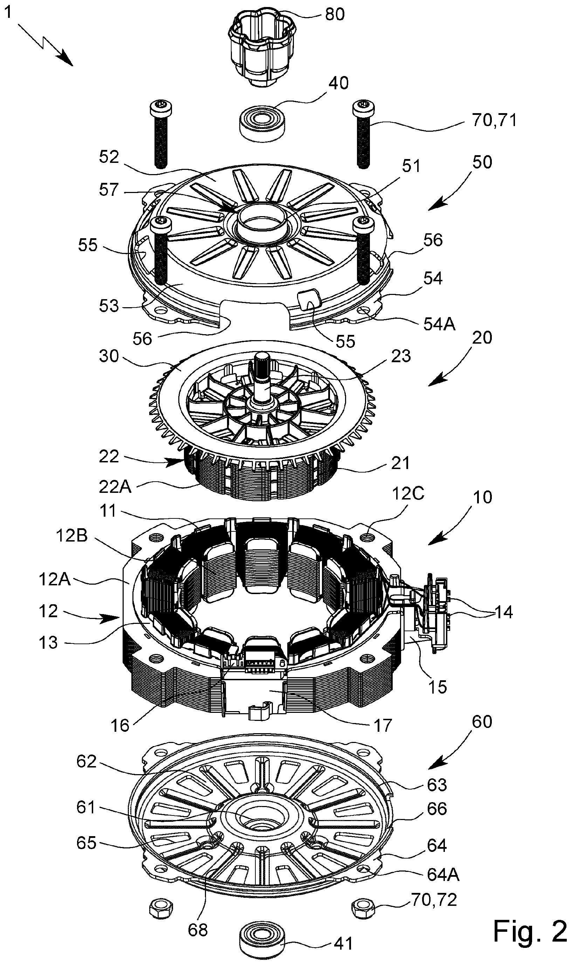

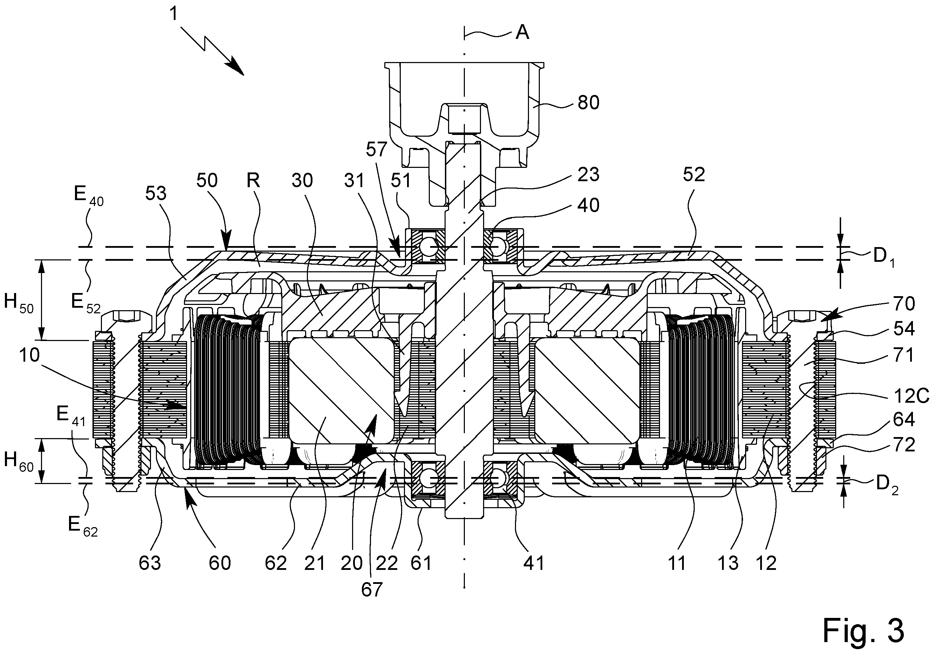

Fig. 1 zeigt einen vorschlagsgemäßen Elektromotor 1 in einer schematischen, perspektivischen Darstellung. Fig. 2 zeigt den Elektromotors 1 in einer schematischen Explosionsdarstellung. Fig. 3 zeigt einen schematischen Querschnitt des Elektromotors 1.

Bei der dargestellten Ausführungsform ist der Elektromotor 1 als bürstenloser Gleichstrommotor (BLDC-Motor) ausgebildet. Es sind jedoch grundsätzlich auch andere Lösungen möglich. Insbesondere könnte die vorschlagsgemäße Lagerbrücke auch bei einem Reluktanzmotor, insbesondere einem geschalteten Reluktanzmotor (SR-Motor), verwendet werden und vorteilhaft sein.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Wie bereits eingangs erwähnt, beziehen sich Begriffe wie "axial", "radial" und dergleichen vorzugsweise auf die Rotationsachse A.

Beim Darstellungsbeispiel ist der Elektromotor 1 als Innenläufer-Motor ausgebildet bzw. ist der Rotor 20 zumindest teilweise innerhalb des Stators 10 angeordnet. Prinzipiell ist es jedoch auch möglich, den vorschlagsgemäßen Elektromotor 1 als Au-ßenläufer-Motor auszubilden (nicht dargestellt).

Der Stator 10 weist mehrere, hier zwölf, Wicklungen/Spulen 11, einen Statorkern 12, einen Spulenträger 13, eine Anschlusseinrichtung 14, eine Anschlusshalterung 15, eine Sensoreinrichtung 16 und/oder eine Sensorhalterung 17 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte 12B, wobei jede Wicklung/Spule 11 um einen Spulenabschnitt/Statorzahn 12B gewickelt ist und/oder sich jeweils ein Spulenabschnitt/Statorzahn 12B durch eine Spule 11 hindurch erstreckt.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1, insbesondere die Spulen 11, angeschlossen werden.

Die Anschlusseinrichtung 14 ist vorzugsweise von einer Anschlusshalterung 15 getragen, die vorzugsweise einstückig mit dem Spulenträger 13 ist bzw. einen Teil des Spulenträgers 13 bildet.

Die Sensoreinrichtung 16 ist vorzugsweise dazu ausgebildet, Messgrößen des Elektromotors 1, insbesondere der Spulen 11 und/oder des Rotors 20, zu messen. Vorzugweise ist die Sensoreinrichtung 16 zur Messung der Temperatur des Elektromotors 1, insbesondere im Bereich der Spulen 11, ausgebildet, beispielsweise mittels eines NTC-Temperatursensors. Alternativ oder zusätzlich kann die Sensoreinrichtung 16 zur Erfassung des Drehwinkels des Rotors 20 bzw. als Drehwinkelsensor ausgebildet sein. Dies kann beispielsweise durch eine Lichtschranke realisiert sein und/oder durch einen Hallsensor bzw. ein Hall-Switch Element, der vorzugsweise die Rotorpolarität bestimmt, aus der die Drehzahl des Rotors 20 berechnet werden kann. Ein/der Hallsensor der Sensoreinrichtung 16 kann auch zur Bestimmung anderer, insbesondere magnetischer, Messgrößen des Elektromotors 1 ausgebildet sein.

Die Sensoreinrichtung 16 ist vorzugsweise von einer Sensorhalterung 17 getragen, die vorzugsweise einstückig mit dem Spulenträger 13 ist bzw. einen Teil des Spulenträgers 13 bildet.

Generell ist es auch möglich, dass nur eine Halterung vorgesehen ist, die sowohl die Anschlusseinrichtung 14 als auch die Sensoreinrichtung 16 hält/trägt.

Vorzugsweise ist/sind die Anschlusshalterung 15 und/oder Sensorhalterung 17 radial außen am Stator 10 bzw. Statorkern 12 bzw. an einer dem Rotor 20 bzw. den Spulen 11 abgewandten Seite des Statorkerns 12 angeordnet.

Der dargestellte und beschriebene Stator 10 ist nur beispielhaft. Insbesondere kann die vorschlagsgemäße Lagerbrücke auch mit einem anders ausgebildeten Stator verwendet werden und vorteilhaft sein.

Beim Darstellungsbeispiel gemäß Fig. 1 bis 3 weist der Rotor 20 vorzugsweise mehrere, hier zehn, Permanentmagnete 21, einen Rotorkern 22, eine Welle 23 und/oder einen Lüfter 30, insbesondere ein Lüfterrad, auf.

Die Permanentmagnete 21 sind vorzugsweise im Rotorkern 22 angeordnet bzw. eingebettet.

Die Permanentmagnete 21 sind vorzugweise sternförmig im Rotor 20 bzw. Rotorkern 22 und/oder um die Welle 23 bzw. Rotationsachse A herum angeordnet und/oder erstrecken sich bzw. haben eine Haupt-/Längserstreckung - bezogen auf die Welle 23 bzw. Rotationsachse A - in radialer Richtung.

Die Permanentmagnete 21 sind vorzugsweise gleichmäßig über einen Kreisumfang verteilt. Benachbarte Permanentmagneten 21 schließen also vorzugsweise einen Winkel von 360° geteilt durch die Anzahl der Permanentmagnete 21 ein.

Grundsätzlich können die Permanentmagnete 21 auch anders als im Darstellungsbeispiel geformt und/oder angeordnet sein, beispielsweise mit einer Längserstreckung in Umfangsrichtung oder senkrecht/tangential zur radialen Richtung.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden.

Vorzugsweise umfasst der Rotorkern 22 mehrere gestapelte Elektrobleche bzw. Rotorbleche 22A oder ist daraus gebildet.

Der Lüfter 30 ist vorzugsweise an der Welle 23 befestigt, insbesondere kraft-, form- und/oder stoffschlüssig. Zusätzlich oder alternativ kann der Lüfter 30 an dem Rotorkern 22 befestigt sein, insbesondere kraft-, form- und/oder stoffschlüssig. Auch ist es möglich, dass der Lüfter 30 an den Rotorkern 22 und/oder die Welle 23 angespritzt ist.

Vorzugsweise ist der Lüfter 30 aus Kunststoff hergestellt und/oder einstückig gebildet, insbesondere spritzgegossen.

Der Lüfter 30 ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse des Lüfters 30.

Der Lüfter 30 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert der Lüfter 30 bei Betrieb des Elektromotors 1 um die Rotationsachse A und kann so entsprechend Luft fördern.

Der Lüfter 30 kann, insbesondere einstückig mit dem Lüfter 30 gebildete, Fixierelemente 31 aufweisen, die die Permanentmagnete 21 im Rotorkern 22 fixieren bzw. klemmen, wie in Fig. 3 dargestellt. Zusätzlich oder alternativ können die Permanentmagnete 21 auch mit dem Rotorkern verklebt sein und/oder durch andere, nicht vom Lüfter 30 gebildete Fixierelemente befestigt sein.

Der dargestellte und beschriebene Rotor 20 ist nur beispielhaft. Insbesondere kann der Elektromotor 1 auch als (geschalteter) Reluktanzmotor ausgebildet sein, wie eingangs erwähnt. Der Rotor 20 ist dann entsprechend ausgebildet, weist bei einem Reluktanzmotor beispielsweise keine Permanentmagneten auf.

Der Elektromotor 1 weist vorzugsweise ein Lager 40, 41 auf. Der Rotor 20, insbesondere die Welle 23, ist vorzugsweise am Lager 40, 41 drehbar gelagert.

Das Lager 40, 41 ist vorzugsweise zumindest im Wesentlichen scheibenförmig bzw. ringförmig ausgebildet.

Vorzugsweise ist das Lager 40, 41 mit der Welle 23 verpresst oder verklebt.

Das Lager 40, 41 ist vorzugsweise als Gleitlager oder als Wälzlager ausgebildet. Besonders bevorzugt ist das Lager 40, 41 als Kugellager ausgebildet bzw. weist Kugeln als Wälzkörper auf, wie in Fig. 3 angedeutet.

Beim Darstellungsbeispiel weist der Elektromotor 1 vorzugsweise zwei, insbesondere baugleiche, Lager 40, 41 auf, nämlich ein oberes Lager 40 und ein unteres Lager 41, die vorzugsweise an axial gegenüberliegenden Seiten des Rotors 20 bzw. der Welle 23 angeordnet sind. Prinzipiell wäre es aber auch möglich, den Rotor 20 nur einseitig zu lagern.

Der Elektromotor 1 weist ein Lagerschild bzw. eine Lagerbrücke 50, 60 für das Lager 40, 41 auf, insbesondere für jedes Lager 40, 41 jeweils eine Lagerbrücke 50, 60.

Vorzugsweise weist der Elektromotor 1 zwei Lagerbrücken 50, 60 auf, nämlich eine obere Lagerbrücke 50 und eine untere Lagerbrücke 60. Das obere Lager 40 ist der oberen Lagerbrücke 50 zugeordnet und das untere Lager 41 der unteren Lagerbrücke 60.

Wie bereits eingangs erwähnt, beziehen sich die Begriffe wie "oben", "unten" und dergleichen vorzugsweise auf die Erstreckung der Rotationsachse A und/oder die bevorzugte Ausrichtung des Elektromotors 1 im eingebauten Zustand bzw. in Gebrauchslage, insbesondere in einer Küchenmaschine 100.

Bei dem vorliegenden Elektromotor 1 ist die bevorzugte Gebrauchslage derart, dass der Lüfter 30 axial oberhalb des Rotorkerns 22 bzw. Stators 10 angeordnet ist, wie in Fig. 2 und Fig. 3 dargestellt. Folglich können die Begriffe "oben" und "unten" auch auf die Position des Lüfters 30 im Elektromotor 1 bezogen werden.

Das obere Lager 40 bzw. die obere Lagerbrücke 50 ist vorzugsweise zum Lüfter 30 benachbart bzw. oberhalb des Lüfters 30 angeordnet. Das untere Lager 41 bzw. die untere Lagerbrücke 60 ist vorzugweise gegenüberliegend bzw. vom Lüfter 30 entfernt bzw. unterhalb des Lüfters 30 bzw. zum Rotorkern 22 benachbart angeordnet.

Im Sinne der Anmeldung bedeutet "oben", "obere" etc. also vorzugsweise "lüfterseitig" bzw. an der axialen Seite, an der der Lüfter 30 angeordnet ist. Entsprechend bedeutet "unten", "untere", etc. vorzugsweise die vom Lüfter 30 abgewandte axiale Seite.

Falls der Rotor 20 nur einseitig gelagert ist, kann auf eine der beiden Lagerbrücken 50, 60 verzichtet werden.

Zur Befestigung der Lagerbrücke(n) 50, 60 weist der Elektromotor 1 vorzugsweise eine oder mehrere Befestigungseinrichtungen 70 auf. Hierauf wird später noch genauer eingegangen.

Optional kann der Elektromotor 1 einen Aufsatz 80 aufweisen, der drehfest mit der Welle 23 verbunden, insbesondere auf die Welle 23 aufgesteckt, ist. Über den Aufsatz 80 kann vorzugsweise die Drehbewegung des Rotors 20 auf eine Vorrichtung übertragen werden, die von dem Elektromotor 1 angetrieben werden soll, beispielsweise eine rotierende Schneide einer Küchenmaschine. Hierzu kann die anzutreibende Vorrichtung in den Aufsatz 80 eingreifen, vorzugsweise zumindest in Drehrichtung formschlüssig.

Es ist aber auch möglich, dass die anzutreibende Vorrichtung direkt mit der Welle 23 verbunden wird.

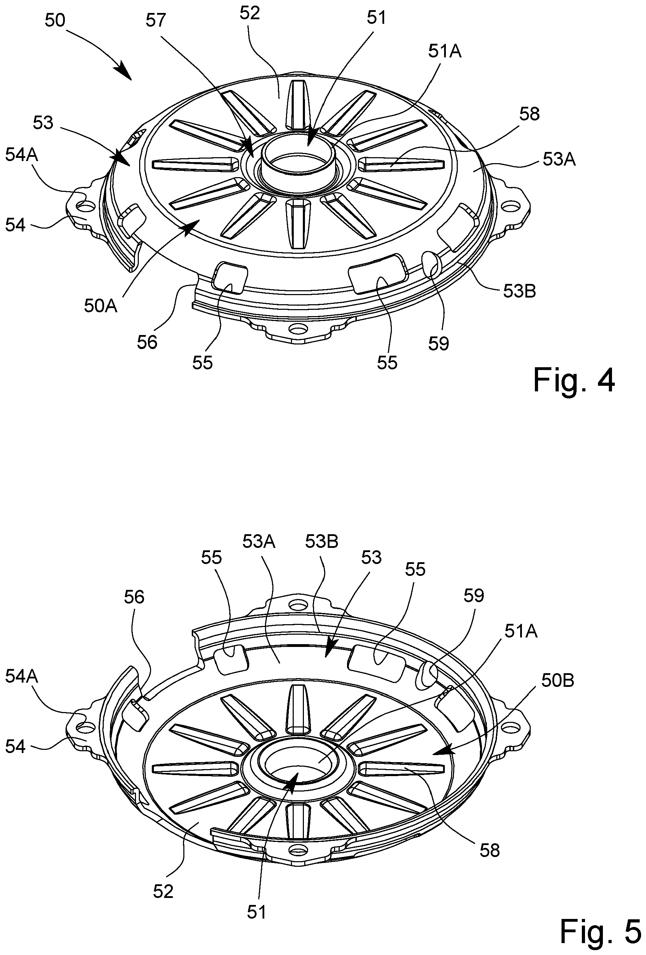

Im Folgenden wird die bevorzugte Anordnung und Ausgestaltung der Lagerbrücken 50, 60 anhand der Figuren 1 bis 3 sowie den weiteren Figuren 4 bis 11 näher erläutert.

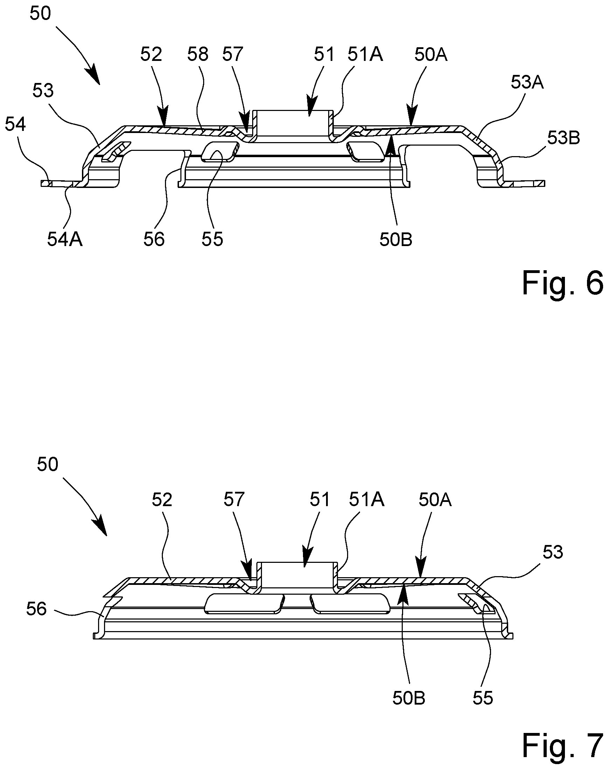

Fig. 4 und Fig. 5 zeigen die obere Lagerbrücke 50 in perspektivischen Darstellungen, wobei Fig. 4 die obere Lagerbrücke 50 von außen bzw. oben und Fig. 5 die obere Lagerbrücke 50 von innen bzw. unten zeigt. Fig. 6 und 7 zeigen verschiedene Schnitte der obere Lagerbrücke 50, nämlich einmal im Bereich von Sicken 58 und einmal außerhalb der Sicken 58, worauf später noch genauer eingegangen wird.

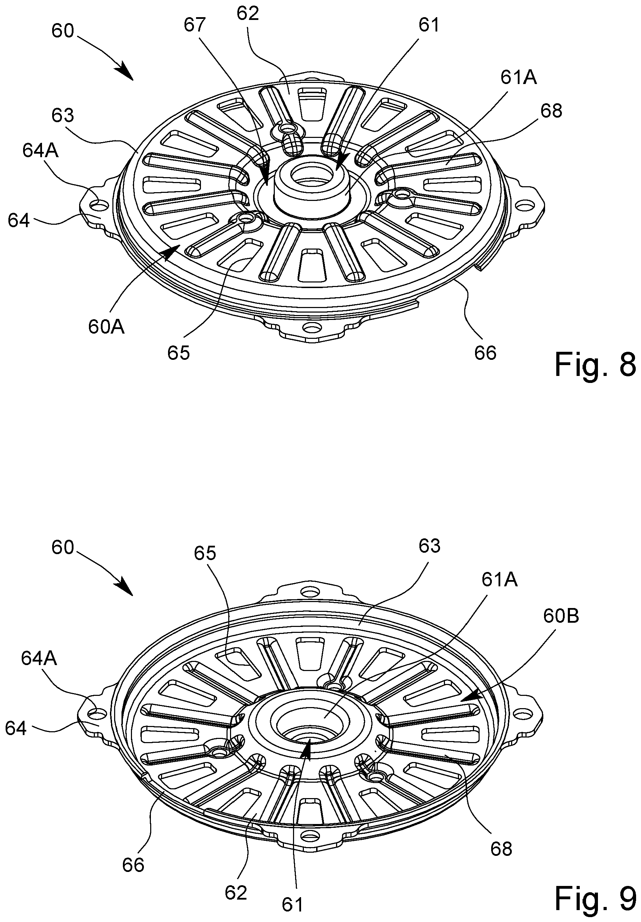

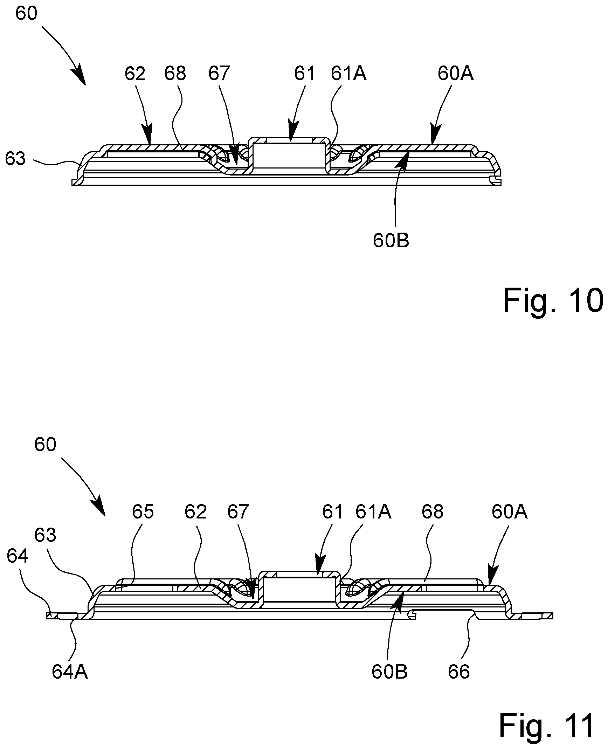

Fig. 8 und Fig. 9 zeigen die untere Lagerbrücke 60 in perspektivischen Darstellungen, wobei Fig. 8 die untere Lagerbrücke 60 von außen bzw. unten und Fig. 9 die untere Lagerbrücke 60 von innen bzw. oben zeigt. Fig. 10 und 11 zeigen verschiedene Schnitte der unteren Lagerbrücke 60, nämlich einmal im Bereich von Sicken 68 und einmal außerhalb der Sicken 68, worauf später noch genauer eingegangen wird.

Sofern nicht anders erwähnt, gelten die folgenden Ausführungen sowohl für die obere Lagerbrücke 50 als auch die untere Lagerbrücke 60. Insbesondere gelten Merkmale, für die verkürzt von der "Lagerbrücke 50, 60" gesprochen wird, vorzugsweise sowohl für die obere Lagerbrücke 50 als auch die untere Lagerbrücke 60.

Wie bereits zuvor erwähnt, ist es prinzipiell möglich, den Rotor 20 nur einseitig zu lagern bzw. nur eine Lagerbrücke 50 oder 60 vorzusehen. Sofern nicht explizit anders erwähnt, gelten die folgenden Ausführungen daher vorzugsweise sowohl für einen Elektromotor 1 mit einseitig gelagerten Rotor 20 bzw. mit nur einem Lager 40 oder 41 bzw. mit nur einer Lagerbrücke 50 oder 60, als auch für einen Elektromotor 1 mit zweiseitig gelagertem Rotor 20 bzw. mit zwei Lagern 40 und 41 bzw. mit zwei Lagerbrücken 50 und 60.

Die Lagerbrücke 50, 60 weist vorzugsweise einen Lagersitz 51, 61, einen Deckabschnitt 52, 62, einen Randabschnitt 53, 63 und/oder einen Befestigungsabschnitt 54, 64 auf. Insbesondere weist die obere Lagerbrücke 50 einen (oberen) Lagersitz 51, einen (oberen) Deckabschnitt 52, einen (oberen) Randabschnitt 53 und/oder einen (oberen) Befestigungsabschnitt 54 auf, und/oder weist die untere Lagerbrücke 60 einen (unteren) Lagersitz 61, einen (unteren) Deckabschnitt 62, einen (unteren) Randabschnitt 63 und/oder einen (unteren) Befestigungsabschnitt 64 auf.

Die Lagerbrücke 50, 60 ist vorzugsweise zumindest im Wesentlichen flach, scheibenförmig, schildförmig und/oder ufo-förmig ausgebildet. Insbesondere ist die Lagerbrücke 50, 60 zumindest im Wesentlichen rund bzw. in einer Draufsicht zumindest im Wesentlichen kreisscheibenförmig ausgebildet.

Vorzugsweise hat die Lagerbrücke 50, 60 zumindest im Wesentlichen die Form eines (flachen) Kegelstumpfs, insbesondere wobei der Deckabschnitt 52, 62 eine Deckfläche und der Randabschnitt 53, 63 die Mantelfläche bildet.

Die Lagerbrücke 50, 60 ist vorzugsweise zumindest im Wesentlichen rotationssymmetrisch.

Die Lagerbrücke 50, 60 hat vorzugsweise eine Symmetrieachse bzw. eine Zentralachse, die vorzugsweise zumindest im Wesentlichen orthogonal zur Haupterstreckung der Lagerbrücke 50, 60 bzw. des Deckabschnitts 52, 62 verläuft.

Im befestigten Zustand entspricht die Symmetrieachse bzw. Zentralachse vorzugsweise der Rotationsachse A bzw. fällt mit dieser zusammen. Der Begriff "Rotationsachse A" kann daher, bezogen auf die Lagerbrücke 50, 60, auch durch "Symmetrieachse" oder "Zentralachse" ersetzt werden.

Vorzugsweise ist die Lagerbrücke 50, 60 einstückig gebildet bzw. hergestellt.

Besonders bevorzugt besteht die Lagerbrücke 50, 60 aus Stahlblech bzw. ist daraus hergestellt. Insbesondere ist die Lagerbrücke 50, 60 aus Stahlblech gestanzt und/oder gebogen. Die Lagerbrücke 50, 60 weist vorzugsweise keine Gussteile bzw. kein Gussmaterial auf.

Vorzugsweise hat die Lagerbrücke 50, 60 eine zumindest im Wesentlichen konstante Wanddicke bzw. Blechdicke. Es ist aber auch möglich, dass unterschiedliche Abschnitte der Lagerbrücke 50, 60 unterschiedliche Wanddicken aufweisen.

Die Lagerbrücke 50, 60 hat vorzugsweise eine Wanddicke von weniger als 2,5 mm, insbesondere von weniger als 2 mm, und/oder von mehr als 1 mm, insbesondere von mehr als 1,5 mm. Besonders bevorzugt beträgt die (größte) Wanddicke etwa 1,8 mm.

Die Lagerbrücke 50, 60 kann einen Rostschutz aufweisen bzw. mit einem Rostschutz versehen oder beschichtet sein, beispielsweise einer Verzinkung oder einer Zink-Magnesium-Beschichtung, insbesondere galvanisch oder im Tauchverfahren aufgebracht.

Der Elektromotor 1 weist vorzugsweise einen Innenraum R auf bzw. definiert einen Innenraum R.

Der Innenraum R ist vorzugsweise von der Lagerbrücke 50, 60 (zumindest teilweise bzw. einseitig) begrenzt. Insbesondere begrenzt der Deckabschnitt 52, 62 den Innenraum R axial und/oder der Randabschnitt 53, 63 den Innenraum R radial.

Bei zwei Lagerbrücken 50, 60 ist der Innenraum R vorzugsweise zwischen den Lagerbrücken 50, 60, insbesondere deren Deckabschnitten 52, 62, gebildet.

Vorzugsweise sind der Stator 10 und/oder der Rotor 20 zumindest teilweise im Innenraum R angeordnet. Insbesondere befinden sich die Permanentmagneten 21, der Rotorkern 22, der Lüfter 30, die Spulen 11 und/oder die Statorzähne 12B vollständig im Innenraum R.

Die Welle 23 kann an einem oder beiden ihren axialen Enden aus dem Innenraum R herausragen, insbesondere durch die Lagerbrücke(n) 50, 60 hindurch. Ferner können der Statorkern 12, die Anschlusseinrichtung 14, die Anschlusshalterung 15, die Sensoreinrichtung 16 und/oder die Sensorhalterung 17 seitlich aus dem Innenraum R herausragen.

Vorzugsweise ist der Innenraum R (auch) durch den Statorkern 12 begrenzt bzw. definiert, insbesondere in radialer Richtung.

Besonders bevorzugt ist der Innenraum R durch die obere Lagerbrücke 50, die untere Lagerbrücke 60 und den Statorkern 12 vollständig begrenzt bzw. definiert. Hier sind jedoch auch andere Lösungen möglich. Wenn nur eine Lagerbrücke 50 oder 60 vorgesehen ist, kann der Innenraum R auch zu einer (axialen) Seite offen sein oder durch ein anderes Gehäuseteil oder dergleichen begrenzt sein.

Das Lager 40 oder 41 bzw. die Lager 40 und 41 ist/sind bevorzugt außerhalb des Innenraums R angeordnet, worauf später noch genauer eingegangen wird.

Die Lagerbrücke 50, 60 weist vorzugsweise eine Außenseite 50A, 60A und/oder eine Innenseite 50B, 60B auf. Die Außenseite 50A, 60A ist die Seite der Lagerbrücke 50, 60, die dem Innenraum R, Stator 10, insbesondere Spulen 11 und/oder Statorkern 12, Rotorkern 22 und/oder Lüfter 30 abgewandt ist. Die Innenseite 50B, 60B ist die Seite der Lagerbrücke 50, 60, die dem Innenraum R, Stator 10, insbesondere Spulen 11 und/oder Statorkern 12, Rotorkern 22 und/oder Lüfter 30 zugewandt ist.

Die Lagerbrücke 50, 60 ist vorzugsweise axial außen am Elektromotor 1 angeordnet und/oder die Lagerbrücke 50, 60, insbesondere deren Außenseite 50A, 60A, bildet vorzugsweise eine axiale Endseite des Elektromotors 1. Bei zwei Lagerbrücken 50, 60 sind diese vorzugsweise an axial gegenüberliegenden Seiten des Elektromotors 1 angeordnet.

Die Lagerbrücke 50, 60 bildet vorzugsweise ein (Außen-)Gehäuse des Elektromotors 1 oder einen Teil eines (Außen-)Gehäuses. Besonders bevorzugt bilden die obere Lagerbrücke 50 und die untere Lagerbrücke 60 gemeinsam ein (Außen-)Gehäuse des Elektromotors 1. In diesem Sinne kann die Lagerbrücke 50, 60 auch als ein Gehäuseteil verstanden bzw. bezeichnet werden, insbesondere die obere Lagerbrücke 50 als ein oberes Gehäuseteil und/oder die untere Lagerbrücke 60 als ein unteres Gehäuseteil.

Vorzugsweise überdeckt die Lagerbrücke 50, 60, insbesondere deren Deckabschnitt 52, 62, den Rotor 20, Rotorkern 22 und/oder Lüfter 30, insbesondere vollständig.

Vorzugsweise überdeckt die Lagerbrücke 50, 60, insbesondere deren Deckabschnitt 52, 62, den Stator 10 zumindest teilweise, vorzugsweise zumindest im Wesentlichen vollständig. Die Spulen 11 sind vorzugsweise vollständig von der Lagerbrücke 50, 60, insbesondere deren Deckabschnitt 52, 62, überdeckt.

Das Lager 40, 41 bzw. der Lagersitz 51, 61 ist vorzugsweise mittig bzw. zentral an der Lagerbrücke 50, 60 und/oder konzentrisch zur Zentralachse bzw. Rotationsachse A bzw. Welle 23 angeordnet bzw. gebildet. Die Zentralachse bzw. Rotationsachse A bzw. Welle 23 verläuft vorzugsweise mittig durch das Lager 40, 41 bzw. den Lagersitz 51, 61.

Vorzugsweise ist der Lagersitz 51, 61 zumindest im Wesentlichen hohlzylindrisch bzw. ringförmig.

Der Lagersitz 51, 61 ist vorzugsweise durch eine ringförmige Wandung 51A, 61A gebildet oder weist eine solche Wandung 51A, 61A auf.

Der Lagersitz 51, 61 bildet vorzugsweise eine, insbesondere zentrale und/oder kreisförmige, Öffnung bzw. Aufnahme, in die das Lager 40, 41 eingesetzt bzw. einsetzbar ist. Vorzugsweise ist die Aufnahme von der Wandung 51A, 61A radial begrenzt.

Die Wandung 51A, 61A ist vorzugsweise konzentrisch zur Zentralachse bzw. Rotationsachse A bzw. Welle 23 angeordnet und/oder erstreckt sich zumindest im Wesentlichen parallel zur Zentralachse bzw. Rotationsachse A bzw. Welle 23 und/oder zumindest im Wesentlichen orthogonal zum Deckabschnitt 52, 62.

Besonders bevorzugt erstreckt sich die Wandung 51A, 61A vom Deckabschnitt 52, 62 (axial) nach außen bzw. in die vom Innenraum R abgewandte (axiale) Richtung.

Das Lager 40, 41 bzw. der Lagersitz 51, 61 ist/sind vorzugsweise (axial) außen an der Lagerbrücke 50, 60 bzw. am Elektromotor 1 angeordnet.

Das Lager 40, 41 ist vorzugsweise in/von dem Lagersitz 51, 61 aufgenommen bzw. gehalten. Vorzugsweise umschließt die Wandung 51A, 61A das Lager 40, 41 radial.

Vorzugsweise ist das Lager 40, 41 mit dem Lagersitz 51, 61 bzw. der Wandung 51A, 61A (fest) verbunden, insbesondere stoffschlüssig. Besonders bevorzugt ist das Lager 40, 41 mit dem Lagersitz 51, 61, insbesondere der Wandung 51A, 61A, verklebt.

Der Deckabschnitt 52, 62 erstreckt sich vorzugsweise in radialer Richtung bzw. zumindest im Wesentlichen orthogonal zur Zentralachse bzw. Rotationsachse A bzw. Welle 23, insbesondere vom Lagersitz 51, 61 aus und/oder bis zum Randabschnitt 53, 63.

Der Deckabschnitt 52, 62 ist vorzugsweise zumindest im Wesentlichen kreisscheibenförmig.

Auf die besondere Ausgestaltung des Deckabschnitts 52, 62 wird später noch genauer eingegangen.

Der Randabschnitt 53, 63 schließt sich vorzugsweise unmittelbar an den Deckabschnitt 52, 62, insbesondere dessen Außenumfang, an.

Der Randabschnitt 53, 63 ist vorzugsweise zumindest im Wesentlichen umlaufend bzw. ringförmig und/oder erstreckt sich vorzugsweise zumindest im Wesentlichen in axialer Richtung und/oder Umfangsrichtung, insbesondere vom Deckabschnitt 52, 62 bzw. dessen radial äußerer Kante bzw. vom Außenumfang des Deckabschnitts 52, 62.

Der Randabschnitt 53, 63 erstreckt sich vorzugsweise in Richtung des Stators 10, insbesondere des Statorkerns 12, und/oder zumindest im Wesentlichen in zur Erstreckung des Lagersitzes 51, 61 bzw. dessen Wandung 51A, 61A entgegengesetzter (axialer) Richtung.

Besonders bevorzugt erstreckt sich der Randabschnitt 53, 63 (auch) in radialer Richtung und/oder schräg zur Zentralachse bzw. Rotationsachse A und/oder schräg zum Deckabschnitt 52, 62.

Vorzugsweise schließt der Randabschnitt 53, 63 mit dem Deckabschnitt 52, 62, insbesondere am Übergang bzw. an der Kante zwischen Randabschnitt 53, 63 und Deckabschnitt 52, 62, einen stumpfen Winkel ein, insbesondere auf der Innenseite 50B, 60B.

Vorzugsweise schließen der Deckabschnitt 52, 62 und der Randabschnitt 53, 63 den stumpfen Winkel über den gesamten (Kreis-)Umfang ein bzw. ist der stumpfe Winkel über den gesamten (Kreis-)umfang vorzugsweise zumindest im Wesentlichen konstant.

Der zwischen Deckabschnitt 52, 62 und Randabschnitt 53, 63 eingeschlossene Winkel ist vorzugsweise größer als 100°, insbesondere größer als 110°, und/oder kleiner als 160°, insbesondere kleiner als 150°.

Die obere Lagerbrücke 50 und die untere Lagerbrücke 60 können unterschiedliche Winkel aufweisen. Vorzugsweise ist der zwischen Deckabschnitt 52 und Randabschnitt 53 eingeschlossene Winkel der oberen Lagerbrücke 50 größer als der zwischen Deckabschnitt 62 und Randabschnitt 63 eingeschlossene Winkel der unteren Lagerbrücke 60, besonders bevorzugt mindestens um 10° oder 15° größer und/oder höchstens um 25° oder 30° größer, ganz besonders bevorzugt um etwa 20° größer.

Vorzugsweise ist der zwischen Deckabschnitt 52 und Randabschnitt 53 eingeschlossene Winkel der oberen Lagerbrücke 50 größer als 120°, insbesondere größer als 130°, und/oder kleiner als 160°, insbesondere kleiner als 150°, und/oder beträgt etwa 140°.

Vorzugsweise ist der zwischen Deckabschnitt 62 und Randabschnitt 63 eingeschlossene Winkel der unteren Lagerbrücke 60 größer als 100°, insbesondere größer als 110°, und/oder kleiner als 140°, insbesondere kleiner als 130°, und/oder beträgt etwa 120°.

Der Randabschnitt 53, 63 kann verschiedene Teilabschnitte aufweisen. Beim Darstellungsbeispiel weist der Randabschnitt 53 der obere Lagerbrücke 50 vorzugsweise einen ersten Abschnitt 53A auf, der sich unmittelbar an den Deckabschnitt 52 anschließt, und einen zweiten Abschnitt 53B, der sich unmittelbar an den ersten Abschnitt 53A anschließt.

Die Abschnitte 53A, 53B sind vorzugsweise unterschiedlich schräg bzw. haben vorzugsweise unterschiedliche Steigungen. Unter der Steigung ist hierbei insbesondere der Quotient aus der axialen Erstreckung zur radialen Erstreckung des jeweiligen Abschnitts 53A, 53B zu verstehen.

Vorzugsweise ist die radiale Erstreckung des ersten Teilabschnitts 53A etwa gleich groß oder (geringfügig) größer als seine axiale Erstreckung.

Der Abschnitt 53B hat vorzugsweise eine größere Steigung als der Abschnitt 53A. Insbesondere weist der Abschnitt 53B eine größere axiale Komponente auf bzw. verläuft der zweite Abschnitt 53B mehr in axialer Richtung als der erste Abschnitt 53A.

Der Randabschnitt 53, 63 kann auch mehr als zwei Teilabschnitte aufweisen. Vorzugsweise nimmt die Steigung bzw. axiale Komponente der Teilabschnitte mit zunehmendem Abstand vom Deckabschnitt 52, 62 zu. Vorzugsweise verläuft der am weitesten vom Deckabschnitt 52, 62 entfernte Teilabschnitt zumindest im Wesentlichen in axialer Richtung.

Es ist auch möglich, dass der Randabschnitt 53, 63 gewölbt bzw. gebogen ist bzw. sich seine Steigung bzw. axiale Komponente kontinuierlich ändert.

Vorzugsweise ist die axiale Erstreckung bzw. die (Bau-)Höhe H₅₀ der oberen Lagerbrücke 50, insbesondere von deren Randabschnitt 53, größer als die axiale Erstreckung bzw. die (Bau-)Höhe H₆₀ der unteren Lagerbrücke 60, insbesondere von deren Randabschnitt 63.

Die Höhe H₅₀ ist insbesondere die axiale Erstreckung des Randabschnitts 53 und/oder der axiale Abstand zwischen Deckabschnitt 52 bzw. einer durch den Deckabschnitt 52 verlaufenden (mittleren) Deckebene E₅₂ und dem Befestigungsabschnitt 54 bzw., im montierten Zustand, zwischen Deckabschnitt 52 bzw. Deckebene E₅₂ und Stator 10, insbesondere Statorkern 12. Entsprechend ist die Höhe H₆₀ ist insbesondere die axiale Erstreckung des Randabschnitts 63 und/oder der axiale Abstand zwischen Deckabschnitt 62 bzw. einer durch den Deckabschnitt 62 verlaufenden (mittleren) Deckebene E₆₂ und dem Befestigungsabschnitt 64 bzw., im montierten Zustand, zwischen Deckabschnitt 62 bzw. Deckebene E₆₂ und Stator 10, insbesondere Statorkern 12.

Die Höhen H₅₀ und H₆₀ sind exemplarisch in Fig. 3 dargestellt.

Vorzugsweise ist die axiale Erstreckung bzw. Höhe H₅₀ der oberen Lagerbrücke 50 etwa doppelt so groß wie die axiale Erstreckung bzw. Höhe H₆₀ der unteren Lagerbrücke 60.

Besonders bevorzugt hat der Randabschnitt 63 der unteren Lagerbrücke 60 zumindest im Wesentlichen die gleiche axiale Erstreckung bzw. Höhe wie der zweite Abschnitt 53B des Randabschnitts 53 der oberen Lagerbrücke 50.

Vorzugsweise ist die axiale Erstreckung bzw. Höhe H₅₀ der oberen Lagerbrücke 50 bzw. von deren Randabschnitt 53 um die axiale Erstreckung bzw. Höhe des ersten Abschnitts 53A größer als die axiale Erstreckung bzw. Höhe H₆₀ der unteren Lagerbrücke 60 bzw. von deren Randabschnitt 63.

Die axiale Erstreckung bzw. Höhe H₅₀ der oberen Lagerbrücke 50 ist vorzugsweise größer als die axiale Erstreckung des Lüfters 30 (ohne Berücksichtigung der Fixierelemente 31).

Der Befestigungsabschnitt 54, 64 schließt sich vorzugsweise unmittelbar an den Randabschnitt 53, 63 an und/oder erstreckt sich vom Randabschnitt 53, 63 radial nach außen.

Beim Darstellungsbeispiel ist der Befestigungsabschnitt 54, 64 durch mehrere, insbesondere vier, Laschen gebildet. Die Laschen sind vorzugsweise gleichmäßig über den (Außen-)Umfang der Lagerbrücke 50, 60 verteilt. Hier sind jedoch auch andere Lösungen möglich. Beispielsweise könnte der Befestigungsabschnitt 54, 64 durch einen umlaufenden Rand bzw. Flansch gebildet sein.

Die Lagerbrücke 50, 60 ist vorzugsweise am Stator 10 bzw. Statorkern 12 befestigt, insbesondere mittels der Befestigungseinrichtung 70.

Beim Darstellungsbeispiel weist die Befestigungseinrichtung 70 mehrere Befestigungselemente auf, insbesondere Schrauben 71 und optional Muttern 72.

Besonders bevorzugt ist die Lagerbrücke 50, 60, insbesondere der Befestigungsabschnitt 54, 64, an vier Stellen am Statorkern 12 befestigt, insbesondere festgeschraubt, bzw. weist die Befestigungseinrichtung 70 vier Schrauben 71 und optional vier Muttern 72 auf.

Vorzugsweise liegt der Befestigungsabschnitt 54, 64 der Lagerbrücke 50, 60 axial flach auf dem Stator 10 bzw. Statorkern 12 auf.

Der Befestigungsabschnitt 54, 64 weist vorzugsweise Löcher bzw. Durchbrechungen 54A, 64A für die Befestigungseinrichtung 70 bzw. Befestigungselemente, insbesondere Schrauben 71, auf. Beim Darstellungsbeispiel ist eine Durchbrechung 54A, 64A pro Lasche vorgesehen.

Der Stator 10 bzw. Statorkern 12 weist vorzugsweise entsprechende Durchbrechungen bzw. Schraublöcher 12C für die Befestigungseinrichtung 70 bzw. Befestigungselemente, insbesondere Schrauben 71, auf.

Die Schraublöcher 12C erstrecken sich vorzugsweise axial vollständig durch den Statorkern 12 bzw. die Schrauben 71 durchgreifen den Statorkern 12 vorzugsweise vollständig.

Besonders bevorzugt sind die obere Lagerbrücke 50 und die untere Lagerbrücke 60 mittels den gleichen Befestigungselementen bzw. Schrauben 71 befestigt bzw. durchgreift jeweils eine Schraube 71 eine Durchbrechung 54A der oberen Lagerbrücke 50, ein Schraubloch 12C des Statorkerns 12 und eine Durchbrechung 64A der unteren Lagerbrücke 60.

Von der Gegenseite, insbesondere an der unteren Lagerbrücke 60, ist die jeweilige Schraube 71 vorzugsweise mittels einer Mutter 72 gesichert. Die Lagerbrücke 50, der Statorkern 22 und die Lagerbrücke 60 sind somit vorzugsweise zwischen Schraube 71 bzw. deren Schraubkopf und der Mutter 72 geklemmt.

Prinzipiell sind hier auch andere Lösungen möglich. Beispielsweise könnten die Schraublöcher 12C jeweils Innengewinde aufweisen, in die jeweils von beiden axialen Seiten bzw. für jede Lagerbrücke 50, 60 separat Schrauben 71 eingeschraubt sind, um die Lagerbrücken 50, 60 festzulegen. Auf Muttern 72 und/oder durchgängige Schraublöcher 12C kann dann verzichtet werden.

Da die Lagerbrücke 50, 60 starr mit dem Statorkern 12 verbunden ist, kann sie auch als Teile des Stators 10 verstanden werden. Insbesondere kann der Stator 10 die Lagerbrücke 50, 60 bzw. die Lagerbrücken 50, 60 umfassen.

Die Lagerbrücke 50, 60 weist vorzugsweise Lüftungsfenster bzw. Lüftungsöffnungen 55, 65 auf.

Durch die Lüftungsöffnungen 55, 65 kann vorzugsweise Luft zur Kühlung des Elektromotors 1 in den Innenraum R einströmen bzw. aus dem Innenraum R herausströmen.

Der Lüfter 50 ist vorzugsweise so angeordnet bzw. ausgebildet, das Luft durch die untere Lagerbrücke 60 bzw. deren Lüftungsöffnungen 65 angesaugt und/oder durch die obere Lagerbrücke 50 bzw. deren Lüftungsöffnungen 55 abgegeben wird.

Im Betrieb wird der Elektromotor 1 bzw. dessen Innenraum R vorzugsweise von unten nach oben bzw. von der unteren Lagerbrücke 60 zur oberen Lagerbrücke 50 durchströmt.

In diesem Sinne können die obere und untere Lagerbrücke 50, 60 auch durch ihre Lage relativ zur Strömung charakterisiert werden, wobei die untere Lagerbrücke 60 stromaufwärts des Lüfters 30 und/oder die obere Lagerbrücke 50 stromabwärts des Lüfters 30 angeordnet ist.

Vorzugsweise sind die Lagerbrücken 50, 60 bezüglich der Lüftungsöffnungen 55, 65 unterschiedlich ausgebildet bzw. sind die Lüftungsöffnungen 55, 65 an unterschiedlichen Abschnitten der Lagerbrücken 50, 60 angeordnet.

Die Lüftungsöffnungen 65 der unteren Lagerbrücke 60 sind insbesondere in Fig. 2 sowie Fig. 8 und 9 dargestellt.

Die untere Lagerbrücke 60 weist vorzugsweise Lüftungsöffnungen 65 in ihrem Deckabschnitt 62 auf, besonders bevorzugt ausschließlich in ihrem Deckabschnitt 62. Der Randabschnitt 63 der unteren Lagerbrücke 60 ist vorzugsweise frei von Lüftungsöffnungen 65.

Die Lüftungsöffnungen 65 der unteren Lagerbrücke 60 haben insbesondere eine axiale Öffnungsrichtung.

Beim Darstellungsbeispiel weist die untere Lagerbrücke 60 bzw. deren Deckabschnitt 62 vorzugsweise (genau) zwölf Lüftungsöffnungen 65 auf. Hier sind jedoch auch andere Lösungen möglich.

Die Lüftungsöffnungen 65 erstrecken sich vorzugsweise in radialer Richtung bzw. haben eine Haupterstreckung in radialer Richtung.

Die Lüftungsöffnungen 65 sind vorzugsweise zumindest im Wesentlichen trapezförmig, insbesondere mit abgerundeten Ecken. Es sind jedoch auch andere Formen möglich, beispielsweise rechteckige oder runde Lüftungsöffnungen 65.

Die Lüftungsöffnungen 65 sind vorzugsweise gleichmäßig bzw. in gleichen Abständen entlang eines, insbesondere zur Rotationsachse A bzw. zum Lagersitz 61 konzentrischen, Kreises angeordnet.

Die Anzahl der Lüftungsöffnungen 65 der unteren Lagerbrücke 60 ist vorzugsweise größer als die Anzahl der Lüftungsöffnungen 55 der oberen Lagerbrücke 50.

Die Lüftungsöffnungen 55 der oberen Lagerbrücke 50 sind insbesondere in Fig. 2 sowie Fig. 4 und 5 dargestellt.

Die obere Lagerbrücke 50 weist vorzugsweise Lüftungsöffnungen 55 in ihrem Randabschnitt 53 auf, besonders bevorzugt ausschließlich in ihrem Randabschnitt 53. Der Deckabschnitt 52 der oberen Lagerbrücke 50 ist vorzugsweise frei von Lüftungsöffnungen 55.

Die Lüftungsöffnungen 55 der oberen Lagerbrücke 50 haben insbesondere eine radiale Öffnungsrichtung.

Die Lüftungsöffnungen 55 sind vorzugsweise zumindest im Wesentlichen rechteckig, insbesondere mit abgerundeten Ecken. Es sind jedoch auch andere Formen möglich.

Vorzugsweise erstrecken sich die Lüftungsöffnungen 55 sowohl über den ersten Abschnitt 53A als auch den zweiten Abschnitt 53B des Randabschnitts 53.

Beim Darstellungsbeispiel weist die obere Lagerbrücke 50 vorzugsweise unterschiedlich geformte Lüftungsöffnungen 55 auf, insbesondere zumindest im Wesentlichen quadratische Lüftungsöffnungen 55 und zumindest im Wesentlichen rechteckige (nicht-quadratische) Lüftungsöffnungen 55. Die rechteckigen (nicht-quadratischen) Lüftungsöffnungen 55 haben vorzugsweise eine größere Erstreckung in Umfangsrichtung als die quadratischen Lüftungsöffnungen 55, insbesondere etwa die doppelte Erstreckung.

Beim Darstellungsbeispiel weist die obere Lagerbrücke 50 bzw. deren Randabschnitt 53 vorzugsweise (genau) sieben Lüftungsöffnungen 55 auf, insbesondere drei quadratische und vier rechteckige (nicht-quadratische) Lüftungsöffnungen 55. Hier sind jedoch auch andere Lösungen möglich.

Die Lüftungsöffnungen 55 sind vorzugsweise so angeordnet, dass der Randabschnitt 53 im Bereich bzw. oberhalb des Befestigungsabschnitts 54 bzw. dessen Laschen öffnungsfrei ist. Insbesondere wird so die Stabilität erhöht.

Vorzugsweise sind die Lüftungsöffnungen 55 so dimensioniert und/oder angeordnet, dass die (Gesamt-)Öffnungsgröße einen optimalen Luftstrom ermöglicht und/oder der mit den Lüftungsöffnungen 55 einhergehende Steifigkeitsverlust minimal ist.

Entsprechend strömt im Betrieb des Elektromotors 1 vorzugsweise Luft in axialer Richtung in den Elektromotor 1 bzw. dessen Innenraum R, insbesondere durch die untere Lagerbrücke 60 bzw. deren Lüftungsöffnungen 65, und in radialer Richtung aus dem Elektromotor 1 bzw. dessen Innenraum R, insbesondere durch die obere Lagerbrücke 50 bzw. deren Lüftungsöffnungen 55.

Vorzugsweise weist die Lagerbrücke 50, 60 eine oder mehrere Aussparungen 56, 66 auf, insbesondere im Randabschnitt 53, 63.

Vorzugsweise sind die Aussparungen 56, 66 zumindest im Wesentlichen rechteckig ausgebildet und/oder zu einer dem Deckabschnitt 52, 62 abgewandten bzw. dem Statorkern 12 zugewandten Seite des Randabschnitts 53, 63 hin offen.

Die Aussparungen 56, 66 sind vorzugsweise für die Anschlusseinrichtung 14 bzw. Anschlusshalterung 15 und/oder die Sensoreinrichtung 16 bzw. Sensorhalterung 17 vorgesehen. Insbesondere ragen die entsprechenden Einrichtungen bzw. Halterungen durch die Aussparungen 56, 66, insbesondere in radialer Richtung, hindurch bzw. nach außen, wie beispielhaft in Fig. 1 dargestellt.

Vorzugsweise sind die Anschlüsse bzw. Elektronik der Anschlusseinrichtung 14 und/oder Sensoreinrichtung 16 von außen zugänglich. Die Aussparungen 56, 66 ermöglichen somit vorzugsweise einen Zugang zu den Anschlüssen für die Stromversorgung des Elektromotors 1 und/oder Datenübertragung von der Sensoreinrichtung 16.

Die Aussparungen 56, 66 können in beiden Lagerbrücken 50 und 60 vorgesehen sein, es ist aber auch möglich, nur bei einer der Lagerbrücken 50 oder 60 entsprechende Aussparungen vorzusehen.

Beispielhaft ist in den Figuren der Fall dargestellt, bei dem für eine der Halterungen, insbesondere die Sensorhalterung 17, nur die obere Lagerbrücke 50 eine entsprechende Aussparung 56 aufweist, während bei der unteren Lagerbrücke 60 keine Aussparung ausgebildet ist.

Ferner ist in den Figuren auch beispielhaft der Fall dargestellt, bei dem für eine der Halterungen, insbesondere die Anschlusshalterung 15, sowohl die obere Lagerbrücke 50 als auch die untere Lagerbrücke 60 eine entsprechend Aussparung 56, 66 aufweisen.

Die Aussparungen 56, 66, insbesondere die Aussparungen 56 der oberen Lagerbrücke 50, können als (zusätzliche) Lüftungsöffnungen dienen. Insbesondere können die Aussparungen 56, 66 entsprechend dimensioniert sein, insbesondere eine grö-ßere Öffnung bilden als für die Halterungen erforderlich.

Vorzugsweise sind die Aussparungen 66 der unteren Lagerbrücke 60 so dimensioniert, dass sie von der entsprechenden Halterung zumindest teilweise, vorzugsweise vollständig, verschlossen werden/sind bzw. kein wesentlicher Luftstrom durch die Aussparungen 66 strömt. Die Aussparungen 66 der unteren Lagerbrücke 60 sind entsprechend vorzugsweise keine (zusätzlichen) Lüftungsöffnungen.

Es ist auch möglich, auf die Aussparungen zu verzichten und den Zugang zu den Anschlüssen des Elektromotors 1 anders bzw. an einer anderen Stelle vorzusehen. Insbesondere beim einseitig gelagerten Rotor 20 kann ein Zugang zu Anschlüssen des Elektromotors 1 über die ungelagerte Seite bzw. Seite ohne Lagerbrücke erfolgen bzw. vorgesehen sein.

Die Lagerbrücke 50, 60, insbesondere die obere Lagerbrücke 50, kann ein Fenster 59 aufweisen, wie in Fig. 4 und 5 dargestellt.

Das Fenster 59 ist vorzugsweise im Randabschnitt 53 angeordnet bzw. gebildet. Vorzugsweise ist das Fenster 59 rund bzw. eine kreisförmige Öffnung.

Vorzugsweise dient das Fenster 59 der Montage des Elektromotors 1, insbesondere der rotatorischen Ausrichtung des Elektromotors 1 in der Montage.

Das Fenster 59 kann auch (zusätzlich) als Lüftungsöffnung dienen.

Nachfolgend wird die bevorzugte Ausgestaltung des Deckabschnitts 52, 62 näher erläutert.

Die Lagerbrücke 50, 60, insbesondere der Deckabschnitt 52, 62, weist vorzugsweise eine Vertiefung 57, 67 auf, die ringförmig bzw. umlaufend ausgebildet ist und/oder die sich, insbesondere unmittelbar, um den Lagersitz 51, 61 herum erstreckt.

Die Vertiefung 57, 67 ist nach innen ausgebildet bzw. geformt und/oder an der Außenseite 50A, 60A gebildet. Insbesondere weist die Lagerbrücke 50, 60 bzw. der Deckabschnitt 52, 62 die Vertiefung 57, 67 auf der Außenseite 50A, 60A auf bzw. ist an der Außenseite 50A, 60A vertieft.

Die Lagerbrücke 50, 60 bzw. der Deckabschnitt 52, 62 ist auf der Innenseite 50B, 60B vorzugsweise entsprechend erhöht bzw. weist eine entsprechende ringförmige Erhöhung auf, wie insbesondere in Fig. 5 und Fig. 9 dargestellt.

Vorzugsweise ist das Lager 40, 41 bzw. der Lagersitz 51, 61 in der Vertiefung 57, 67 angeordnet und/oder erstreckt sich die Wandung 51A, 61A von der Vertiefung 57, 67 aus (axial) nach außen.

Die Vertiefung 57, 67 ist vorzugsweise eine Verbiegung oder Verformung des Deckabschnitts 52, 62. Insbesondere weist der Deckabschnitts 52, 62 etwa die gleiche Wanddicke im Bereich der Vertiefung 57, 67 und außerhalb der Vertiefung 57, 67 auf. Mit anderen Worten ist die Vertiefung 57, 67 vorzugsweise nicht durch eine dünnere Wandung realisiert.

Die Vertiefung 57, 67 ist vorzugsweise konisch ausgebildet bzw. weist eine konisch verlaufende Wandung auf. Insbesondere hat die Vertiefung 57, 67 bzw. die die Vertiefung 57, 67 bildende Wandung des Deckabschnitts 52, 62 bzw. der von der Vertiefung 57, 67 gebildete Freiraum zumindest im Wesentlichen die Form eines Hohlkegelstumpfs.

Vorzugsweise hat die Vertiefung 57, 67 einen sich im Wesentlichen orthogonal zur Zentral-/Rotationsachse A bzw. von der Wandung 51A des Lagersitzes 51 erstreckende Wandung bzw. einen Boden und eine sich schräg vom Boden erstreckende seitliche Wandung.

In einem Schnitt, der mittig durch den Lagersitz 51 bzw. entlang der Zentral-/Rotationsachse A verläuft, ist die Lagerbrücke 50, 60 im Bereich der Vertiefung 57, 67 vorzugsweise zumindest im Wesentlichen U-förmig, wie insbesondere in Fig. 7 und Fig. 11 dargestellt. Die U-Form ist insbesondere von den Wandungen der Vertiefung 57, 67 und der Wandung 51A des Lagersitzes 51 gebildet.

Vorzugsweise weist sowohl die obere Lagerbrücke 50 eine Vertiefung 57 als auch die untere Lagerbrücke 60 eine Vertiefung 67 auf, die gleich oder unterschiedlich ausgebildet sein können.

Beim Darstellungsbeispiel ist die Vertiefung 67 der unteren Lagerbrücke 60 vorzugsweise tiefer bzw. weist eine größere axiale Erstreckung als die Vertiefung 57 der oberen Lagerbrücke 50 auf.

Beim Darstellungsbeispiel ist die Vertiefung 67 der unteren Lagerbrücke 60 vorzugsweise breiter bzw. weist eine größere radiale Erstreckung als die Vertiefung 57 der oberen Lagerbrücke 50 auf. Insbesondere können sowohl der Boden als auch die seitliche Wandung der Vertiefung 67 eine größere radiale Erstreckung als die entsprechenden Wandungen der Vertiefung 57 aufweisen.

Der Deckabschnitt 52, 62 definiert vorzugsweise eine Haupterstreckungsebene bzw. Blechebene bzw. Deckebene E₅₂, E₆₂. Die Deckebene E₅₂, E₆₂ erstreckt sich vorzugsweise orthogonal zur Zentralachse bzw. Rotationsachse A und/oder in radialer Richtung. Die Deckebene E₅₂, E₆₂ verläuft vorzugsweise entlang und/oder (mittig) durch den Deckabschnitt 52, 62 bzw. bildet eine mittlere Ebene des Deckabschnitts 52, 62.

Die Deckebene E₅₂ der oberen Lagerbrücke 50 und die Deckebene E₆₂ der unteren Lagerbrücke 60 sind exemplarisch in Fig. 3 gestrichelt eingezeichnet.

Vorzugsweise erstreckt sich die Deckebene E₅₂, E₆₂ durch das Lager 40, 41 bzw. den Lagersitz 51, 61 hindurch. Mit anderen Worten weist das Lager 40, 41 bzw. der Lagersitz 51, 61 vorzugsweise keinen axialen Abstand von der Deckebene E₅₂, E₆₂ auf und/oder ist innerhalb der Deckebene E₅₂, E₆₂ angeordnet.

Das Lager 40, 41 bzw. der Lagersitz 51, 61 definiert vorzugsweise eine Lagerebene E₄₀, E₄₁. Die Lagerebene E₄₀, E₄₁ erstreckt sich vorzugsweise orthogonal zur Zentralachse bzw. Rotationsachse A und/oder in radialer Richtung. Die Lagerebene E₄₀, E₄₁ verläuft vorzugsweise mittig durch das Lager 40, 41 bzw. den Lagersitz 51, 61 bzw. bildet eine mittlere Ebene des Lagers 40, 41 bzw. Lagersitzes 51, 61.

Die Lagerebene E₄₀ des oberen Lagers 40 bzw. des zugehörigen Lagersitzes 51 und die Lagerebene E₄₁ des unteren Lagers 41 bzw. des zugehörigen Lagersitzes 61 sind exemplarisch in Fig. 3 gestrichelt eingezeichnet.

Die Lagerebene E₄₀ des oberen Lagers 40 ist vorzugsweise auf der dem Innenraum R abgewandten Seite des Deckabschnitts 52 bzw. der Deckebene E₅₂ der oberen Lagerbrücke 50 angeordnet.

Die Lagerebene E₄₁ des unteren Lagers 41 kann (wie beim oberen Lager 40) auf der dem Innenraum R abgewandten Seite des Deckabschnitts 62 bzw. der Deckebene E₆₂ der unteren Lagerbrücke 60 angeordnet sein. Vorzugsweise ist die Lagerebene E₄₁ des unteren Lagers 41 jedoch auf der dem Innenraum R zugewandten Seite der Deckebene E₆₂ angeordnet, wie in Fig. 3 dargestellt.

Die Lagerebene E₄₀, E₄₁ und die Deckebene E₅₂, E₆₂ können einen Abstand D₁, D₂ voneinander aufweisen.

Insbesondere weisen die Lagerebene E₄₀ des oberen Lagers 40 und die Deckebene E₅₂ der oberen Lagerbrücke 50 einen (axialen) Abstand D₁ voneinander auf und/oder weisen die Lagerebene E₄₁ des unteren Lagers 41 und die Deckebene E₆₂ der unteren Lagerbrücke 60 einen (axialen) Abstand D₂ voneinander auf.

Die Abstände D₁ und D₂ können gleich groß oder unterschiedlich sein. Beim Darstellungsbeispiel ist der Abstand D₂ vorzugsweise kleiner als der Abstand D₁.

Der Abstand D₁, D₂ kann auch als Hebelarm, insbesondere beim Ableiten von Kräften vom Lager 40, 41 über die Lagerbrücke 50, 60, verstanden werden.

Vorzugsweise ist der Abstand D₁, D₂ möglichst klein bzw. weist die Lagerbrücke 50, 60 einen möglichst kleinen Hebelarm auf.

Durch die Vertiefung 57, 67 bzw. die Anordnung des Lagers 40, 41 bzw. Lagersitzes 51, 61 in der Vertiefung 57, 67 rückt die Lagerebene E₄₀, E₄₁ vorzugsweise näher an die Deckebene E₅₂, E₆₂ bzw. wird der Abstand D₁, D₂ gegenüber einer Lagerbrücke 50, 60 ohne Vertiefung 57, 67 verringert.

Der Abstand D₁, D₂ ist vorzugsweise kleiner als die halbe axiale Erstreckung des Lagers 40, 41 bzw. Lagersitzes 51, 61.

Es ist auch möglich, die Lagerbrücke 50, 60 so auszubilden, dass die Deckebene E₅₂, E₆₂ und Lagerebene E₄₀, E₄₁ zumindest im Wesentlichen identisch sind bzw. der Abstand D₁, D₂ etwa null beträgt.

Das Lager 40, 41 bzw. der Lagersitz 51, 61 ist vorzugsweise durch die Vertiefung 57, 67 in Richtung des Innenraums R versetzt angeordnet.

Besonders bevorzugt ist das Lager 40, 41 axial außen an der Lagerbrücke 50, 60 bzw. am Deckabschnitt 52, 62 und durch die Vertiefung 57, 67 in axialer Richtung zum Innenraum R hin versetzt angeordnet.

Die Lagerbrücke 50, 60, insbesondere der Deckabschnitt 52, 62, weist vorzugsweise (Versteifungs-)Sicken 58, 68 auf.

Die Sicken 58, 68 sind vorzugsweise in die Lagerbrücke 50, 60 bzw. den Deckabschnitt 52, 62 gestanzt bzw. eingeprägt.

Vorzugsweise sind die Sicken 58, 68 rinnenförmig ausgebildet und/oder haben eine Haupt-/Längserstreckung in radialer Richtung und/oder sind speichenartig oder strahlenartig oder sternförmig um den Lagersitz 51, 61 bzw. das Lager 40, 41 bzw. die Zentral-/Rotationsachse A herum angeordnet.

Die Sicken 58, 68 sind vorzugsweise gleichmäßig über einen Kreisumfang verteilt. Benachbarte Sicken 58, 68 schließen also vorzugsweise einen Winkel von 360° geteilt durch die Anzahl der Sicken 58, 68 ein.

Beim Darstellungsbeispiel sind vorzugsweise (genau) zwölf Sicken 58, 68 in der Lagerbrücke 50, 60 bzw. im Deckabschnitt 52, 62 gebildet.

Die Sicken 58, 68 erstrecken sich vorzugsweise von der Vertiefung 57, 67 bis zum oder bis kurz vor den radial äußeren Rand des Deckabschnitts 52, 62.

Die Sicken 58, 68 sind vorzugsweise Verbiegungen oder Verformungen des Deckabschnitts 52, 62. Insbesondere weist der Deckabschnitts 52, 62 etwa die gleiche Wanddicke im Bereich der Sicken 58, 68 und außerhalb der Sicken 58, 68 auf. Mit anderen Worten sind die Sicken 58, 68 vorzugsweise nicht durch eine dünnere Wandung realisiert.

Die Lagerbrücke 50, 60 weist vorzugsweise keine Materialverdickungen zur Versteifung auf.

Vorzugsweise sind die Sicken 58 der oberen Lagerbrücke 50 unterschiedlich zu den Sicken 68 der unteren Lagerbrücke 60 ausgebildet bzw. geformt.

Die Sicken 58 der oberen Lagerbrücke 50 sind vorzugsweise nach innen ausgebildet bzw. geformt. Insbesondere ist die obere Lagerbrücke 50 bzw. der Deckabschnitt 52 im Bereich der Sicken 58 auf der Außenseite 50A vertieft bzw. auf der Innenseite 50B erhöht. Mit anderen Worten bilden die Sicken 58 vorzugsweise auf der Außenseite 50A Vertiefungen/Nuten bzw. auf der Innenseite 50B Erhöhungen/Rippen/Grate. Dies ist insbesondere in Fig. 4 und 5 dargestellt.

Auf der Innenseite 50B sind zwischen den Sicken 58 bzw. zwischen den durch die Sicken 58 gebildeten Rippen sich verbreiternde Passagen zur (radialen) Luftführung gebildet.

Die Breite der Sicken 58 bzw. die Erstreckung der Sicken 58 in Umfangsrichtung nimmt vorzugsweise in radialer Richtung zum Lager 40, zum Lagersitz 51, zur Vertiefung 57 und/oder zur Zentralachse bzw. Rotationsachse A hin zu, insbesondere linear. Mit anderen Worten nimmt die Breite der Sicken 58 mit zunehmendem Radius bzw. mit zunehmendem Abstand vom Lager 40, vom Lagersitz 51, von der Vertiefung 57 und/oder von der Zentral- bzw. Rotationsachse A ab, insbesondere linear.

Die Sicken 58 sind (in Draufsicht bzw. in einem Schnitt orthogonal zur Zentral-/Rotationsachse A) vorzugsweise zumindest im Wesentlichen trapezförmig und/oder weisen jeweils eine vorzugsweise zumindest im Wesentlichen trapezförmige Außenkontur auf.

Unter der Außenkontur sind hierbei vorzugsweise die äußeren Kanten der jeweiligen Sicke 58 zu verstehen, bzw. die Kanten zwischen der jeweilige Sicke 58 und dem benachbarten (sickenfreien) Bereich des Deckabschnitts 52.

Die Ecken der trapezförmigen Außenkontur können abgerundet sein. Vorzugsweise sind (nur) die der Zentral-/Rotationsachse A zugewandten Ecken abgerundet.

Vorzugsweise haben die Sicken 58 eine zumindest im Wesentlichen rechteckige Innenkontur bzw. Bodenfläche. Die Bodenfläche ist hierbei vorzugsweise die vertiefte Fläche auf der Außenseite 50A bzw. die Innenkontur ist durch die innen bzw. vertieft liegenden Kanten der jeweiligen Sicke 58 gebildet.

Die seitlichen Wandungen der Sicken 58, insbesondere die Wandungen zwischen der Außenkontur und der Innenkontur, sind vorzugsweise gerundet bzw. konvex ausgebildet. Vorzugsweise sind (auch) die Wandungen der durch die Sicken 58 gebildeten Rippen auf der Innenseite 50B gerundet bzw. konvex ausgebildet.

Fig. 6 zeigt einen Schnitt der oberen Lagerbrücke 50 durch zwei gegenüberliegende Sicken 58. Der Schnitt des Elektromotors 1 in Fig. 3 zeigt die Lagerbrücke 50 ebenfalls im Bereich zweier gegenüberliegender Sicken 58. Fig. 7 zeigt einen Schnitt der oberen Lagerbrücke 50 außerhalb der Sicken 58. Die Schnitte verlaufen vorzugsweise mittig durch die Lagerbrücke 50 bzw. entlang der Zentral-/Rotationsachse A.

Die Tiefe der Sicken 58 nimmt vorzugsweise in radialer Richtung zum Lager 40, zum Lagersitz 51, zur Vertiefung 57 und/oder zur Zentralachse bzw. Rotationsachse A hin zu, insbesondere linear. Mit anderen Worten nimmt die Tiefe der Sicken 58 mit zunehmendem Radius bzw. mit zunehmendem Abstand vom Lager 40, vom Lagersitz 51, von der Vertiefung 57 und/oder von der Zentral- bzw. Rotationsachse A ab, insbesondere linear.

Die Tiefe der Sicken 58 ist hierbei vorzugsweise die axiale Erstreckung der von der Sicke 58 gebildeten Vertiefung auf der Außenseite 50A, insbesondere gegenüber der Haupterstreckungsebene der Außenseite 50A.

Entsprechend nimmt vorzugsweise auf der Innenseite 50B die axiale Erstreckung bzw. Höhe der durch die Sicken 58 gebildeten Rippen in radialer Richtung zum Lager 40, zum Lagersitz 51, zur Vertiefung 57 und/oder zur Zentralachse bzw. Rotationsachse A hin zu, insbesondere linear.

Die Sicken 58 sind vorzugsweise rampenartig bzw. keilartig geformt.

Die tiefste Stelle der Sicke 58 ist vom Lüfter 30 vorzugsweise ausreichend beabstandet, um eine optimale Luftführung zu gewährleisten.

Am Übergang von der Sicke 58 zur Vertiefung 57 ist der Deckabschnitt 52 im Schnitt vorzugsweise S-förmig oder wellenförmig ausgebildet, wie insbesondere in Fig. 6 dargestellt. Insbesondere ist auf der Innenseite 50B in diesem Bereich ein Verwirbelungsabschnitt gebildet.

Vorzugsweise biegt sich der Deckabschnitt 52 von der Sicke 58, insbesondere deren tiefster Stelle, zunächst nach außen, bevor er sich zur Bildung der Vertiefung 57 nach innen biegt.

Im Bereich außerhalb der Sicken 58 und außerhalb der Vertiefung 57 ist der Deckabschnitt 52 vorzugsweise zumindest im Wesentlichen flach/eben bzw. orthogonal zur Zentral-/Rotationsachse A ausgebildet, wie in Fig. 7 dargestellt.

Die Sicken 68 der unteren Lagerbrücke 60 sind vorzugsweise nach außen ausgebildet bzw. geformt. Insbesondere ist die untere Lagerbrücke 60 bzw. der Deckabschnitt 62 im Bereich der Sicken 68 auf der Außenseite 60A erhöht bzw. auf der Innenseite 60B vertieft. Mit anderen Worten bilden die Sicken 68 vorzugsweise auf der Innenseite 60B Vertiefungen/Nuten bzw. auf der Außenseite 60A Erhöhungen/Rippen/Grate. Dies ist insbesondere in Fig. 8 und 9 dargestellt.

Vorzugsweise sind die Sicken 58 der oberen Lagerbrücke 50 und die Sicken 68 der unteren Lagerbrücke 60 also in entgegengesetzte Richtungen geformt.

Fig. 10 zeigt einen Schnitt der unteren Lagerbrücke 60 durch zwei gegenüberliegende Sicken 68. Fig. 11 zeigt einen Schnitt der unteren Lagerbrücke 60 außerhalb der Sicken 68. Die Schnitte verlaufen vorzugsweise mittig durch die Lagerbrücke 60 bzw. entlang der Zentral-/Rotationsachse A.

Vorzugsweise ist die Tiefe der Sicken 68 der unteren Lagerbrücke 60 zumindest im Wesentlichen konstant.

Im Bereich außerhalb der Sicken 68 und außerhalb der Vertiefung 67 ist der Deckabschnitt 62 vorzugsweise zumindest im Wesentlichen flach/eben bzw. orthogonal zur Zentral-/Rotationsachse A ausgebildet, wie in Fig. 11 dargestellt.

Vorzugsweise erstrecken sich die Sicken 68 zumindest teilweise in die Vertiefung 67 hinein.

Die Breite der Sicken 68 bzw. die Erstreckung der Sicken 68 in Umfangsrichtung ist vorzugsweise zumindest im Wesentlichen konstant.

Die Sicken 68 sind (in Draufsicht bzw. in einem Schnitt orthogonal zur Zentral-/Rotationsachse A) vorzugsweise zumindest im Wesentlichen rechteckig und/oder weisen jeweils eine vorzugsweise zumindest im Wesentlichen rechteckige Außenkontur und/oder Innenkontur auf.

Die seitlichen Wandungen der Sicken 68, insbesondere die Wandungen zwischen der Außenkontur und der Innenkontur, sind vorzugsweise gerundet bzw. konvex ausgebildet. Vorzugsweise sind (auch) die Wandungen der durch die Sicken 68 gebildeten Rippen auf der Außenseite 60A gerundet bzw. konvex ausgebildet.

Die Sicken 68 und Lüftungsöffnungen 65 sind bei der unteren Lagerbrücke 60 vorzugsweise alternierend angeordnet. Zwischen zwei benachbarten Lüftungsöffnungen 65 ist vorzugsweise jeweils eine Sicke 68 angeordnet bzw. gebildet, insbesondere mittig zwischen den benachbarten Lüftungsöffnungen 65.

In einer alternativen Ausführungsform (nicht dargestellt) sind die Sicken 58 der oberen Lagerbrücke 50 vorzugsweise nach außen ausgebildet bzw. geformt. Insbesondere ist die obere Lagerbrücke 50 bzw. der Deckabschnitt 52 im Bereich der Sicken 58 dann auf der Außenseite 50A erhöht bzw. auf der Innenseite 50B vertieft.

Mit anderen Worten bilden die Sicken 58 dann vorzugsweise auf der Innenseite 50B Vertiefungen/Nuten bzw. auf der Außenseite 50A Erhöhungen/Rippen/Grate.

Die im Zusammenhang mit den Sicken 58 weiteren beschriebenen Merkmale sind vorzugsweise auch bei der alternativen Ausführungsform entsprechend ausgebildet. Insbesondere haben die Sicken 58 die gleiche Form, mit dem einzigen Unterschied, dass sie in die entgegengesetzte Richtung geformt sind. Vorzugsweise weisen also auch die die Sicken 58 der alternativen Ausführungsform eine Trapezform auf.

Vorzugsweise haben auch die Sicken 58 der alternativen Ausführungsform mit zunehmendem Abstand/Radius von der Zentral-/Rotationsachse A eine abnehmende axiale Erstreckung bzw. Tiefe, wobei die Tiefe hier von der Innenseite 50B aus bestimmt/gemessen ist.

Bei der alternativen Ausführungsform sind auf der Außenseite 50A folglich Erhöhungen/Rippen/Grate gebildet, deren axiale Erstreckung bzw. Höhe zur Zentral-/Rotationsachse A hin zunimmt.

Durch die nach außen geformten Sicken 58 wird vorzugsweise Material des Deckabschnitts 52 nach außen bzw. vom Innenraum R weg verlagert, wodurch sich vorzugsweise die mittlere Deckebene E₅₂ in Richtung Lagerebene E₄₀ verschiebt bzw. der Hebelarm bzw. Abstand D₁ verringert wird.

Bei der alternativen Ausführungsform kann vorzugsweise auf die Vertiefung 57 verzichtet werden, insbesondere da der Hebelarm bereits durch die nach außen geformten Sicken 58 (ausreichend) kompensiert wird.

Abgesehen von den Sicken 58 und ggf. einer fehlenden Vertiefung 57 weist die obere Lagerbrücke 50 der alternativen Ausführungsform vorzugsweise die gleichen oder entsprechende Merkmale wie die in den Figuren gezeigte und beschriebene obere Lagerbrücke 50 auf. Besonders bevorzugt ist auch bei der alternativen Ausführungsform der Lagersitz 51 wie bei der ersten Ausführungsform ausgebildet, insbesondere durch eine sich vom Deckabschnitt 52 axial nach außen erstreckende Wandung 51A gebildet.

Vorzugsweise ist/sind der Randabschnitt 53 und/oder Befestigungsabschnitt 54 der alternativen Ausführungsform wie zuvor für die erste Ausführungsform beschrieben und gezeigt ausgebildet.

Besonders bevorzugt sind auch bei der oberen Lagerbrücke 50 gemäß der alternativen Ausführungsform Lüftungsöffnungen 55 ausschließlich im Randabschnitt 53 gebildet.

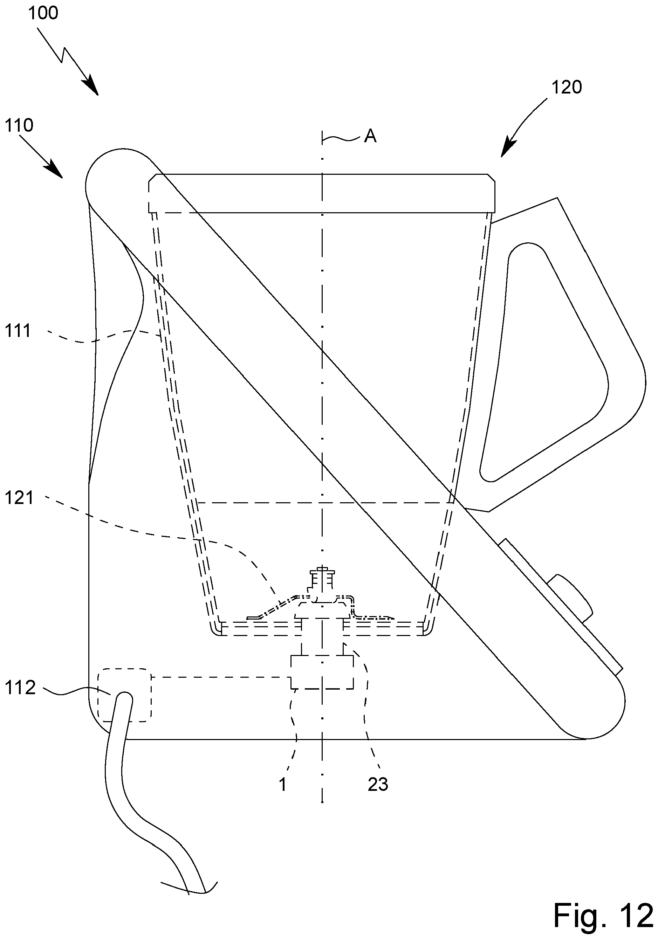

Fig. 12 zeigt schematisch eine vorschlagsgemäße Küchenmaschine 100 zur Zubereitung von Speisen bzw. Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 12 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 23 - optional über den Wellenaufsatz 80 - mit dem Rührer 121 verbunden oder verbindbar ist und/oder - in der Anschlussposition - von unten formschlüssig in den Boden des Gefäßes 120 eingreift.

Der Elektromotor 1 ist in der Küchenmaschine 100 vorzugsweise derart eingebaut, dass sich der Lüfter 30 bzw. die (obere) Lagerbrücke 50 bei der in Fig. 12 gezeigten üblichen Gebrauchslage der Küchenmaschine 100 oben an dem Elektromotor 1 bzw. oberhalb des Stators 10 und/oder Rotorkerns 22 befindet.

Bevorzugt ist der Elektromotor 1 also so eingebaut, dass beim üblichen Betrieb der Küchenmaschine 100 Luft in axialer Richtung bzw. von unten in den Elektromotor 1 hineinströmt, insbesondere durch die Lüftungsöffnungen 65 der unteren Lagerbrücke 60, und in radialer Richtung bzw. seitlich aus dem Elektromotor 1 herausströmt, insbesondere durch die Lüftungsöffnungen 55 der oberen Lagerbrücke 50.

Vorzugsweise entspricht die Rotationsachse A des Elektromotors 1 der Drehachse des Rührers 121 und/oder einer Mittelachse des Gefäßes 120, die mittig durch das Gefäß 120 verläuft, wie in Fig. 12 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 mit elektrischem Strom zu versorgen.

Abhängig von der Drehgeschwindigkeit bzw. Drehzahl des Rührers 121 bzw. Elektromotors 1 ist die Küchenmaschine 100 vorzugsweise sowohl zum Rühren (bei kleinen Drehzahlen) als auch zum Zerkleinern (bei großen Drehzahlen) von Zutaten ausgebildet. Besonders bevorzugt ist auch ein langsames Rühren, beispielsweise mit 1 U/min oder 10 U/min, und/oder ein sehr feines bzw. definiertes Zerkleinern, beispielsweise mit 10.000 U/min, 12.000 U/min oder 15.000 U/min, möglich.

Einzelne Aspekte und/oder Merkmale der vorliegenden Erfindung können unabhängig, aber auch in beliebiger Kombination realisiert werden.

### Bezugszeichenliste:

- 1: Elektromotor

- 10: Stator
- 11: Spule
- 12: Statorkern
- 12A: Statorblech
- 12B: Statorzahn
- 12C: Schraubloch
- 13: Spulenträger
- 14: Anschlusseinrichtung
- 15: Anschlusshalterung
- 16: Sensoreinrichtung
- 17: Sensorhalterung

- 20: Rotor
- 21: Permanentmagnet
- 22: Rotorkern
- 22A: Rotorblech
- 23: Welle

- 30: Lüfter
- 31: Fixierelement

- 40: (oberes) Lager
- 41: (unteres) Lager

- 50: (obere) Lagerbrücke
- 50A: Außenseite
- 50B: Innenseite
- 51: Lagersitz
- 51A: Wandung
- 52: Deckabschnitt
- 53: Randabschnitt
- 53A: erster Abschnitt
- 53B: zweiter Abschnitt
- 54: Befestigungsabschnitt
- 54A: Durchbrechung
- 55: Lüftungsöffnung
- 56: Aussparung
- 57: Vertiefung
- 58: Sicke
- 59: Fenster

- 60: (untere) Lagerbrücke
- 60A: Außenseite
- 60B: Innenseite
- 61: Lagersitz
- 62: Deckabschnitt
- 63: Randabschnitt
- 64: Befestigungsabschnitt
- 65: Lüftungsöffnung
- 66: Aussparung
- 67: Vertiefung
- 68: Sicke

- 70: Befestigungseinrichtung
- 71: Schraube
- 72: Mutter

- 80: Aufsatz

- 100: Küchenmaschine
- 110: Basisstation
- 111: Aufnahme
- 112: Stromversorgung
- 120: Gefäß
- 121: Rührer

- A: Rotationsachse
- D1: Abstand zwischen E52 und E40
- D2: Abstand zwischen E62 und E41
- E52: Deckebene (Lagerbrücke 50)
- E62: Deckebene (Lagerbrücke 60)
- E40: Lagerebene (oberes Lager 40)
- E41: Lagerebene (unteres Lager 41)
- H50: Bauhöhe (Lagerbrücke 50)
- H60: Bauhöhe (Lagerbrücke 60)
- R: Innenraum

## Patentansprüche

1. Elektromotor (1), insbesondere für eine Küchenmaschine (100), mit einem Rotor (20) und einem Stator (10), wobei der Rotor (20) um eine Rotationsachse (A) relativ zum Stator (10) drehbar ist,
wobei der Elektromotor (1) ein Lager (40, 41) zur drehbaren Lagerung des Rotors (20) und eine Lagerbrücke (50, 60) für das Lager (40, 41) aufweist,
wobei die Lagerbrücke (50, 60) einen Lagersitz (51, 61) und einen sich zumindest im Wesentlichen orthogonal zur Rotationsachse (A) erstreckenden Deckabschnitt (52, 62) aufweist,
wobei der Deckabschnitt (52, 62) eine Vertiefung (57, 67) aufweist, die sich um den Lagersitz (51, 61) herum erstreckt und den Deckabschnitt (52, 62) mit dem Lagersitz (51, 61) verbindet, und
wobei der Lagersitz (51, 61) durch eine Wandung (51A, 61A) gebildet ist, die sich von der Vertiefung (57, 67) in axialer, einem Innenraum (R) des Elektromotors (1) abgewandter Richtung erstreckt.

2. Elektromotor nach Anspruch 1, wobei die Vertiefung (57, 67) konisch ausgebildet ist.

3. Elektromotor nach Anspruch 1 oder 2, wobei die Lagerbrücke (50, 60) an einem Statorkern (12) des Stators (10) befestigt, insbesondere festgeschraubt, ist.

4. Elektromotor nach einem der voranstehenden Ansprüche, wobei die Lagerbrücke (50, 60) einen umlaufenden Randabschnitt (53, 63) aufweist, der sich schräg zum Deckabschnitt (52, 62) erstreckt und/oder mit dem Deckabschnitt (52, 62) einen stumpfen Winkel einschließt, insbesondere einen Winkel von mehr als 100°, besonders bevorzugt mehr als 130°.

5. Elektromotor nach Anspruch 4, wobei die Lagerbrücke (50) Lüftungsöffnungen (55) aufweist, wobei die Lüftungsöffnungen (55) ausschließlich im Randabschnitt (53) ausgebildet sind.

6. Elektromotor nach einem der voranstehenden Ansprüche,
wobei der Deckabschnitt (52, 62) eine Deckebene (E₅₂, E₆₂) definiert, die sich zumindest im Wesentlichen orthogonal zur Rotationsachse (A), und durch das Lager (40, 41) hindurch erstreckt, und/oder
wobei das Lager (40, 41) eine Lagerebene (E₄₀, E₄₁) definiert, die sich orthogonal zur Rotationsachse (A) und mittig durch das Lager (40, 41) erstreckt und auf der dem Innenraum (R) abgewandten Seite des Deckabschnitts (52, 62) angeordnet ist.

7. Elektromotor nach einem der voranstehenden Ansprüche, wobei der Deckabschnitt (52, 62) mehrere, insbesondere genau zwölf, radial verlaufende Sicken (58, 68) aufweist.

8. Elektromotor nach Anspruch 7, wobei die Tiefe der Sicken (58) in radialer Richtung zur Rotationsachse (A) hin zunimmt.

9. Elektromotor nach Anspruch 7 oder 8, wobei die Sicke (58) zumindest im Wesentlichen trapezförmig ausgebildet ist.

10. Elektromotor nach einem der Ansprüche 7 bis 9, wobei die Lagerbrücke (50) in einem Querschnitt, der entlang einer Sicke (58) verläuft, S-förmig ausgebildet ist.

11. Elektromotor nach einem der voranstehenden Ansprüche, wobei der Elektromotor (1) eine obere Lagerbrücke (50) und eine untere Lagerbrücke (60) aufweist, die unterschiedlich ausgebildet sind.

12. Elektromotor nach Anspruch 11, wobei die obere Lagerbrücke (50) mit Lüftungsöffnungen (55) ausschließlich in ihrem Randabschnitt (53) und die untere Lagerbrücke (60) mit Lüftungsöffnungen (65) ausschließlich in ihrem Deckabschnitt (62) ausgebildet ist.

13. Elektromotor nach Anspruch 11 oder 12, wobei die obere Lagerbrücke (50) nach innen geformte Sicken (58) und die untere Lagerbrücke (60) nach außen geformte Sicken (68) aufweist.

14. Elektromotor nach einem der Ansprüche 11 bis 13, wobei der axiale Abstand (H₅₀) zwischen dem Deckabschnitt (52) der oberen Lagerbrücke (50) und dem Stator (10) größer ist als der axiale Abstand (H₆₀) zwischen dem Deckabschnitt (62) der unteren Lagerbrücke (60) und dem Stator (10).

15. Küchenmaschine (100) mit einem Elektromotor (1) nach einem der voranstehenden Ansprüche, insbesondere wobei die Küchenmaschine (100) einen Rührer (121) aufweist und der Elektromotor (1) zum Antrieb des Rührers (121) ausgebildet ist.
